(19) Europäisches Patentamt
European Patent Office
Office européen des brevets

(11) EP 3 725 816 B1

(12) EUROPEAN PATENT SPECIFICATION

(45) Date of publication and mention of the grant of the patent:
**05.03.2025 Bulletin 2025/10**

(21) Application number: **18888768.1**

(22) Date of filing: **11.10.2018**

(51) International Patent Classification (IPC):
***C08F 210/16*** *(2006.01)* ***C08F 4/6592*** *(2006.01)*
***F16L 9/12*** *(2006.01)*

(52) Cooperative Patent Classification (CPC):
(C-Sets available)
**F16L 9/12;** C08F 4/65916; C08F 210/16 (Cont.)

(86) International application number:
**PCT/KR2018/011985**

(87) International publication number:
**WO 2019/117443 (20.06.2019 Gazette 2019/25)**

(54) **ETHYLENE-BASED POLYMER HAVING EXCELLENT LONG-TERM PRESSURE RESISTANCE CHARACTERISTICS, AND PIPE USING SAME**

POLYMER AUF ETHYLENBASIS MIT HERVORRAGENDER LANGFRISTIGER DRUCKBESTÄNDIGKEIT UND ROHR DAMIT

POLYMÈRE À BASE D'ÉTHYLÈNE PRÉSENTANT D'EXCELLENTES CARACTÉRISTIQUES DE RÉSISTANCE À LA PRESSION À LONG TERME ET TUYAU L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2017 KR 20170171987**

(43) Date of publication of application:
**21.10.2020 Bulletin 2020/43**

(73) Proprietor: **Hanwha Solutions Corporation**
**Jung-gu**
**Seoul 04541 (KR)**

(72) Inventors:
- **JOUNG, Ui Gab**
  **Daejeon 34127 (KR)**
- **PARK, Hye Ran**
  **Daejeon 34190 (KR)**
- **LIM, Seong Jae**
  **Daejeon 34189 (KR)**
- **LIM, Yu Jeong**
  **Busan 46501 (KR)**
- **JEONG, Tae Uk**
  **Daegu 41041 (KR)**
- **KU, Il Hwae**
  **Daejeon 34140 (KR)**
- **KIM, Dong Ok**
  **Seoul 06505 (KR)**
- **JEONG, Dong Wook**
  **Daejeon 34140 (KR)**

(74) Representative: **Klunker IP**
**Patentanwälte PartG mbB**
**Destouchesstraße 68**
**80796 München (DE)**

(56) References cited:
**EP-A1- 3 653 653**
**WO-A1-2017/181424**
**KR-A- 20080 050 428**
**KR-A- 20140 120 378**
**KR-A- 20160 122 065**
**KR-B1- 101 692 346**
**KR-B1- 101 723 774**
**KR-B1- 101 773 722**
**US-A1- 2019 127 501**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **MATSKO MIKHAIL A. ET AL: "Study of the compositional heterogeneity of ethylene-hexene-1 copolymers by thermal fractionation technique by means of differential scanning calorimetry", JOURNAL OF THERMAL ANALYSIS AND CALORIMETRY, vol. 113, no. 2, 21 November 2012 (2012-11-21), NL, pages 923 - 932, XP055826905, ISSN: 1388-6150, Retrieved from the Internet <URL:https://link.springer.com/content/pdf/10.1007/s10973-012-2773-9.pdf> DOI: 10.1007/s10973-012-2773-9**



(52) Cooperative Patent Classification (CPC): (Cont.)

C-Sets
**C08F 210/16, C08F 2/34;**
**C08F 210/16, C08F 4/65904;**
**C08F 210/16, C08F 4/65925, C08F 4/65927;**
C08F 210/16, C08F 210/14, C08F 2500/10, C08F 2500/12, C08F 2500/34, C08F 2500/35

## Description

TECHNICAL FIELD

The present invention relates to an ethylene-based polymer having excellent long-term pressure resistance characteristics and a pipe using the same, and more particularly, to an ethylene-based polymer that satisfies the balance of excellent mechanical characteristics and molding processability, as compared with a conventional ethylene-based polymer, and a pipe using the same.

The present invention relates to an ethylene-based polymer having a wide molecular weight distribution and a long chain branch so that a lamellar thickness is small, thereby increasing tie molecules and obtaining excellent long-term pressure resistance characteristics, and a pipe using the same.

BACKGROUND ART

Physical properties of polymer materials, such as polyethylene, are sensitive to molding conditions, temperature, time, and environment during storage and transportation, and long-term changes in physical properties of polymer materials are still difficult to accurately predict, thus causing unexpected fracture. In particular, when polymer materials come into contact with chemical solvents, cracking may occur even under extremely low stress or strain conditions. Environmental stress cracking caused by external stimulus is a complex phenomenon including absorption and penetration of solvents, thermodynamics of mixtures, cavitation, partial yielding of materials, and the like. In particular, it has been reported that the rate of environmental stress cracking reaches 15% to 20% among the causes of fractures of products using polymer materials, and environmental stress cracking resistance (ESCR) is emerging as an important figure of polymer materials.

Environmental stress cracking (ESC) is a fracture phenomenon caused by loosening of tie-molecules and chain entanglements in an amorphous phase. Environmental stress cracking resistance, which indicates the resistance to environmental stress cracking, is affected by molecular structure parameters such as a molecular weight distribution and a comonomer distribution. As the molecular weight increases, environmental stress cracking resistance increases because tie-molecule concentration and chain entanglement increase. Therefore, environmental stress cracking resistance increases when short chain branch (SCB) is introduced to increase its content or its distribution, and environmental stress cracking resistance increases when the molecular weight distribution is wide or long chain branch (LCB) is included.

In general, polymer chains are not unfolded straight and are folded at a short distance. The folded chains form a bundle to form lamellar and grow in three dimensions around nuclei to form spherulites.

A partially crystalline polymer includes a crystalline region and an amorphous region. The crystalline region refers to the inside of lamellar, and the amorphous region refers to the outside of lamellar. The crystalline region affects mechanical properties and the amorphous region affects elastic properties.

There are three types of inter-crystalline materials in an amorphous region of polyethylene. A first type is cilia in which a chain starts from a crystalline region and ends at an amorphous region. A second type is a loose loop that starts from lamellar and ends at lamellar and thus exists between an amorphous region and the lamellar. A third type is inter-lamellar links which connect two adjacent lamellae and in which tie molecules and physical chain entanglements exist. Two or more lamellae make crystals at the same time to form tie molecules.

Meanwhile, since pipes are buried in the ground and used for a long time, the pipes need to be made of a material having excellent processability and long-term stability from deformation or breakage caused by external pressure. The key factor affecting the long-term pressure resistance characteristics of the pipes is tie chain. PE is a semi-crystalline structure in a solid phase and has both crystalline and amorphous regions. The crystalline region forms a lamellar structure similar to a sandwich shape. The lamellar structure is formed while PE polymer chains form crystals and grow. When short chain branch (SCB) is formed in a PE main chain through the introduction of comonomer, the lamellar structure is too large to be included in a lamellar crystal structure. Hence, the lamellar structure hinders the smooth growth of the lamellar crystal structure of the main chain and serves to escape from the crystal structure. The PE main chain, which is kinked out of the lamellar, grows into another lamellar crystal structure, and a tie chain connecting lamellar to lamellar is generated. As the polymer main chain is longer, the tie chain is more likely to be formed, and the tie chain connects a plurality of lamellae. Therefore, toughness and ESCR (or long-term creep) characteristics are enhanced. In addition, since the tie chain has elongation and flow characteristics, the tie chain absorbs and dissipates external energy.

In the manufacture of pipes using a high-density polyethylene polymer, there are molding methods such as injection and extrusion, but these methods are common in that the high-density polyethylene polymer is first molten by heating and then molded. Therefore, the behavior of the high-density polyethylene polymer during heating and melting, that is, the melting property, is an extremely important physical property in molding the high-density polyethylene-based polymer. In general, as MI, MFI, and MFR increase, the melt flowability becomes more excellent.

Conventional high-density polyethylene polymers used for extrusion, compression, injection, or rotational

molding are generally prepared by using titanium-based Ziegler-Natta catalysts or chromium-based catalysts. The high-density polyethylene polymers prepared by using such catalysts have a wide molecular weight distribution, thereby improving melt flowability. However, since components having a low molecular weight are mixed, mechanical properties such as impact resistance are significantly deteriorated. Also, since a comonomer distribution is concentrated in a low molecular weight material, chemical resistance is deteriorated. For this reason, there is a problem that speeding up in injection molding cannot be achieved while maintaining good mechanical properties.

In order to solve these problems, much research has been conducted into metallocene catalysts. U.S. Pat. No. 6525150 proposes a metallocene catalyst capable of producing a resin having a narrow molecular weight distribution using uniform active sites of metallocene and having a uniform copolymer distribution in the case of copolymer. However, since the molecular weight distribution is narrow, there is a problem that the mechanical strength is excellent but the molding processability is low.

As described above, in the case of single metallocene catalysts, since the molecular weight distribution is narrow due to uniform active sites, the application development of the metallocene catalyst system has not been progressing much in the field of high-density polyethylene polymer in which the balance between mechanical properties and moldability is important. In order to solve these problems, it has been proposed to widen a molecular weight distribution by using a plurality of reactors or by mixing many kinds of metallocene catalysts. However, there is an improvement in moldability when the method of widening the molecular weight distribution is used, but other physical properties are inevitably deteriorated. Therefore, it was impossible to obtain a high-density polyethylene polymer having excellent physical properties such as mechanical strength obtained by narrowing the molecular weight distribution.

In order to solve the problems of the metallocene catalyst, melt flowability of a polymer is improved by using a catalyst introducing a long chain branch (LCB) to a main chain of a polymer as a branch. However, there is a problem that mechanical properties such as impact resistance are significantly lower than in the case of using a conventional metallocene catalyst.

Many methods have been proposed so as to improve mechanical properties and melt flowability of high-density polyethylene polymers produced using metallocene catalysts. However, in most cases, only solutions to linear low-density polyolefins have been proposed. Also, since metallocene has a characteristic that the activity thereof tends to decrease as a concentration of comonomer decreases, metallocene is not economical due to low activity when producing high-density polyolefins.

Matsko Mikhail A. et al. "Study of the compositional heterogeneity of ethylene-hexene-1 copolymers by thermal fractionation technique by means of differential scanning calorimetry, JOURNAL OF THERMAL ANALYSIS AND CALORIMETRY, Vol. 113, No. 2, 21 November 2012 discloses the data of lamellar thickness of ethylene-hexene copolymers.

WO 2017/181424 A1 provides a polyethylene material and an application thereof. The density of the polyethylene material is distributed within a range of 0.880-0.960 g/cm$^3$.The polyethylene material undergoes temperature rising elution fractionation to obtain a 40°C fraction with a 9.0-40.0 wt% range. The polyethylene material has a melting point of 110-135°C. The polyethylene material has a substantial fraction of highly-branched, medium to small molecules, and a relatively high fraction of high molecular weight molecules. The high molecular weight molecules are also highly branched. The polyethylene material therefore has a relatively higher melting point.

Therefore, there is a need for a high-density polyolefin polymer that solves the above-described problems and has excellent long-term pressure resistance characteristics while satisfying the balance of excellent mechanical properties and molding processability.

## DESCRIPTION OF EMBODIMENTS

## TECHNICAL PROBLEM

The present invention has been made in an effort to solve the above-described problems.

An object of the present invention is to provide a high-density ethylene-based polymer that satisfies the balance of excellent mechanical characteristics and molding processability, as compared with a conventional ethylene-based polymer, and a pipe using the same.

Another object of the present invention is to provide an ethylene-based polymer having a wide molecular weight distribution and a small lamellar thickness, thereby increasing tie molecules and obtaining excellent long-term pressure resistance characteristics, and a pipe using the same

Still another object of the present invention is to provide a high-density ethylene-based polymer including a long chain branch by using a metallocene catalyst, thereby obtaining excellent productivity due to low load during processing such as extrusion, compression, injection, and rotational molding, and a pipe using the same.

## SOLUTION TO PROBLEM

In order to achieve the above-described objects of the present invention and achieve the characteristic effects of the present invention described below, and the the present invention is defined in the appended claims.

## ADVANTAGEOUS EFFECTS OF DISCLOSURE

The present invention can provide an ethylene-based polymer having a wide molecular weight distribution and a small lamellar thickness, thereby increasing tie molecules and obtaining excellent long-term pressure resistance characteristics, and a pipe using the same.

The present invention can provide a high-density ethylene-based polymer including a long chain branch by using a metallocene catalyst, thereby obtaining excellent productivity due to low load during processing such as extrusion, compression, injection, and rotational molding, and a pipe using the same.

## BRIEF DESCRIPTION OF DRAWINGS

FIG. 1 is a graph showing a lamellar thickness distribution of Example 1 and Comparative Examples 1 and 2.
FIG. 2 is a graph showing complex viscosity of Example and Comparative Example.
FIG. 3 is a van Gurp-Palmen graph of Example and Comparative Example.

## BEST MODE

The present invention will be described with reference to specific embodiments and the accompanying drawings. The embodiments will be described in detail in such a manner that the present invention may be carried out by those of ordinary skill in the art. It should be understood that various embodiments of the present invention are different, but need not be mutually exclusive.

Therefore, the following detailed description is not to be taken in a limiting sense, and the scope of the present invention is to be limited only by the appended claims and the entire scope of equivalents thereof, if properly explained.

Also, it will be understood that although the terms "first", "second", etc. may be used herein to describe various components, these components should not be limited by these terms. These terms are only used to distinguish one component from another.

Hereinafter, embodiments of the present invention will be described with reference to the accompanying drawings, so that those of ordinary skill in the art can easily carry out the present invention.

The present invention includes a high-density ethylene-based polymer which is polymerized in the presence of a hybrid supported metallocene catalyst.

The polymer is a concept including a copolymer.

Hybrid supported metallocene catalysts of the present invention each independently include at least one first metallocene compound, at least one second metallocene compound, and at least one cocatalyst compound.

The first metallocene compound, which is a transition metal compound according to the present invention, may be represented by Formula 1 below. The first metallocene compound serves to exhibit high activity at the hybrid supported catalyst and serves to improve melt flowability of a produced polymer. The first metallocene compound has a low mixing rate of comonomer and has characteristics of forming a low molecular weight, thereby improving processability in processing the polymer. In addition, high density is formed due to low mixing of comonomer, and high activity is exhibited even in high-density production. Since the first metallocene compound has an asymmetric structure and a non-bridge structure having different ligands, the first metallocene compound forms a steric hindrance in which the comonomer hardly approaches a catalystic active site. Therefore, the first metallocene serves to reduce the mixing of the comonomer and exhibits both processability and high catalystic activity in the production of the hybrid supported metallocene.

[Formula 1]

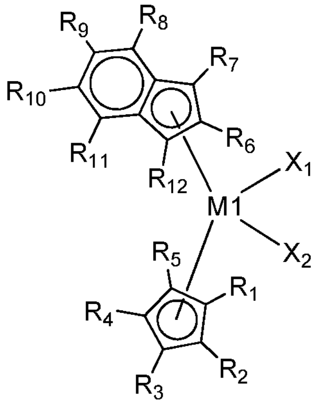

In Formula 1, M1 may be a group 4 transition metal of the periodic table of elements, $X_1$ and $X_2$ may each independently be one of halogen atoms, $R_1$ to $R_{12}$ may each independently be a hydrogen atom, a substituted or unsubstituted $C_1$-$C_{10}$ alkyl group, a substituted or unsubstituted $C_6$-$C_{20}$ aryl group, or a substrate or unsubstituted $C_7$-$C_{40}$ alkylaryl group and may be linked to each other to form a ring, cyclopentadiene linked to $R_1$ to $R_5$ and indene linked to $R_6$ to $R_{12}$ may have an asymmetric structure having different structures, and the cyclopentadiene and the indene may not be linked to each other to form a non-bridge structure.

In the present invention, ions or molecules coordinating with the transition metal (M1 and M2 in Formulae 1 and 2), such as cyclopendadiene linked to $R_1$ to $R_5$ and indene linked to $R_6$ to $R_{12}$ in Formula 1, and indene linked to $R_{13}$ to $R_{18}$ and indene linked to $R_{21}$ to $R_{26}$ are referred to as ligands.

In the present invention, the term "substituted" means that a hydrogen atom is substituted with a substituent such as a halogen atom, a $C_1$-$C_{20}$ hydrocarbon group, a $C_1$-$C_{20}$ alkoxy group, and a $C_6$-$C_{20}$ aryloxy group, unless otherwise specified.

In addition, the term "hydrocarbon group" means a linear, branched, or cyclic saturated or unsaturated hydrocarbon group, unless otherwise specified, and the alkyl group, the alkenyl group, the alkynyl group, and the like may be linear, branched, or cyclic.

In a specific example, examples of the transition metal compound represented by Formula 1 include transition metal compounds having the following structures and mixtures thereof, but the present invention is not limited thereto.

[Formula 1-1]

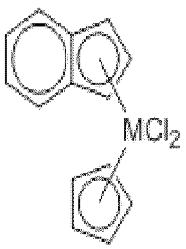

[Formula 1-2]

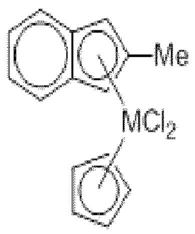

[Formula 1-3]

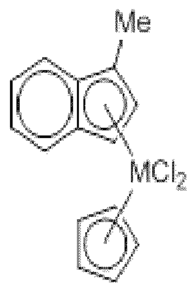

[Formula 1-4]

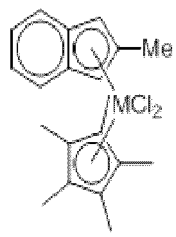

[Formula 1-5] [Formula 1-6] [Formula 1-7] [Formula 1-8]

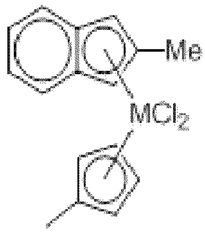 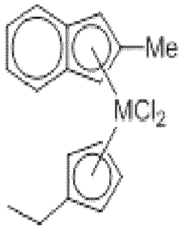 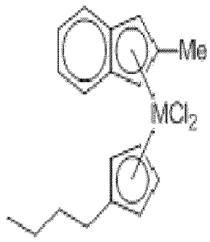 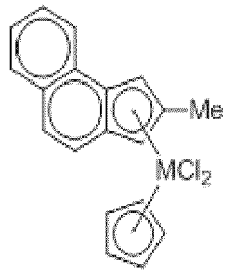

[Formula 1-9] [Formula 1-10] [Formula 1-11] [Formula 1-12]

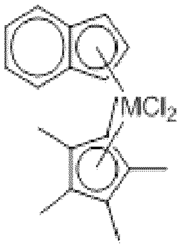 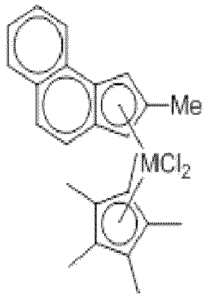 8 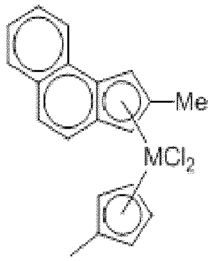 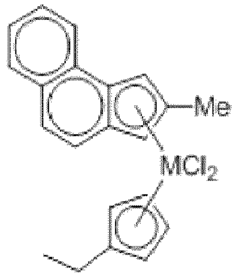

[Formula 1-13] [Formula 1-14] [Formula 1-15] [Formula 1-16]

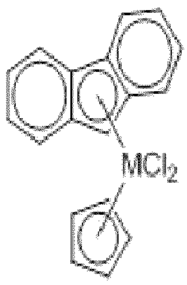 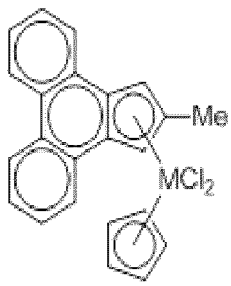 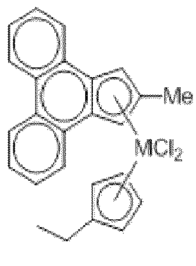 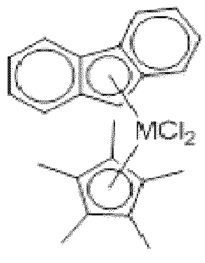

[Formula 1-17] [Formula 1-18] [Formula 1-19]

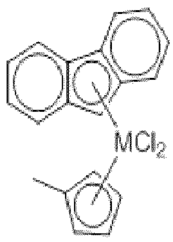

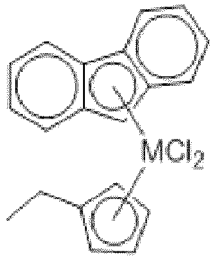

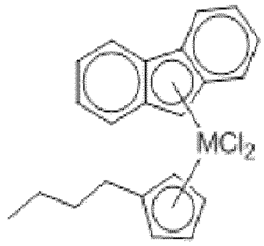

In the transition metal compounds, M is a group 4 transition metal of the periodic table of elements, such as hafnium (Hf), zirconium (Zr), or titanium (Ti), and Me is a methyl group.

The second metallocene compound, which is a transition metal compound according to the present invention, may be represented by Formula 2 below.

The second metallocene compound serves to exhibit a high mixing rate of comonomer at the hybrid supported catalyst and serves to improve mechanical properties of the produced polymer.

The second metallocene compound has a high mixing rate of comonomer and has characteristics of forming a high molecular weight material and concentrating the distribution of comonomer on the high molecular weight material, thereby improving impact strength, flexural strength, environmental stress cracking resistance, and melt tension. In addition, the second metallocene compound forms a long chain branched structure to improve melt flowability of the high-density polyethylene resin of a high molecular weight.

Since the second metallocene compound has a symmetric structure or an asymmetric structure and a bridge structure having various ligands, the second metallocene compound forms a steric hindrance so that the comonomer easily approaches the catalytic active site, thereby increasing the mixing of the comonomer.

[Formula 2]

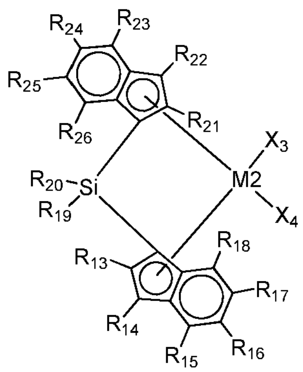

In Formula 2, M2 may be a group 4 transition metal of the periodic table of elements, $X_3$ and $X_4$ may each independently be one of halogen atoms, $R_{13}$ to $R_{18}$ may each independently be a hydrogen atom, a substituted or unsubstituted $C_1$-$C_{10}$ alkyl group, a substituted or unsubstituted $C_6$-$C_{20}$ aryl group or a substituted or unsubstituted $C_7$-$C_{40}$ alkylaryl group and may be linked to each other to form a ring, $R_{21}$ to $R_{26}$ may each independently be a hydrogen atom, a substituted or unsubstituted $C_1$-$C_{10}$ alkyl group, a substituted or unsubstituted $C_6$-$C_{20}$ aryl group, or a substituted or unsubstituted $C_7$-$C_{40}$ alkylaryl group and may be linked to each other to form a ring, $R_{19}$ and $R_{20}$ may each independently be a substituted or unsubstituted $C_1$-$C_{20}$ alkyl group and may be linked to each other to form a ring, indene linked to $R_{13}$ to $R_{18}$ and indene linked to $R_{21}$ to $R_{26}$ may have the same structure or different structures, and the indene linked to $R_{13}$ to $R_{18}$ and the indene linked to $R_{21}$ to $R_{26}$ may be linked to Si to form a bridge structure.

In the present invention, the term "substituted" means that a hydrogen atom is substituted with a substituent such as a halogen atom, a $C_1$-$C_{20}$ hydrocarbon group, a $C_1$-$C_{20}$ alkoxy group, and a $C_6$-$C_{20}$ aryloxy group, unless otherwise specified. In addition, the term "hydrocarbon group" means a linear, branched, or cyclic saturated or unsaturated hydrocarbon group, unless otherwise specified, and the alkyl group, the alkenyl group, the alkynyl group, and the like may be linear, branched, or cyclic.

In a specific example, examples of the transition metal compound represented by Formula 2 include transition metal compounds having the following structures and mixtures thereof, but the present invention is not limited thereto.

[Formula 2-1]

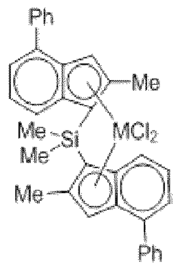

[Formula 2-2]

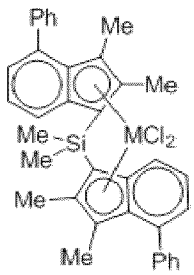

[Formula 2-3]

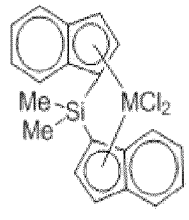

[Formula 2-4]

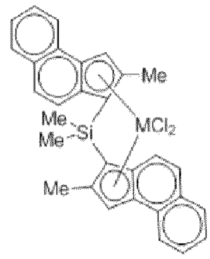

[Formula 2-5]

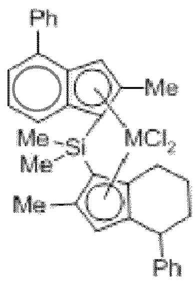

[Formula 2-6]

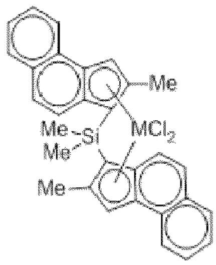

[Formula 2-7]

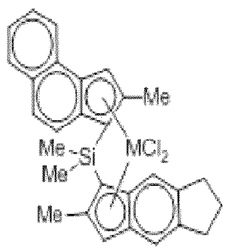

[Formula 2-8]

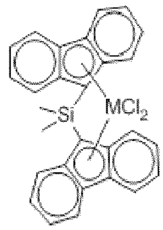

[Formula 2-9]

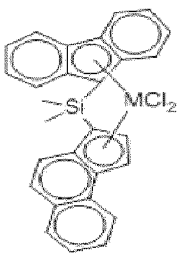

[Formula 2-10]

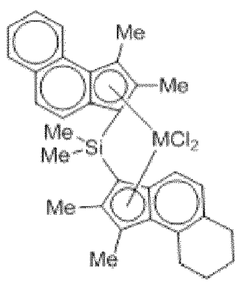

[Formula 2-11]

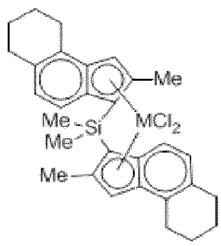

[Formula 2-12]

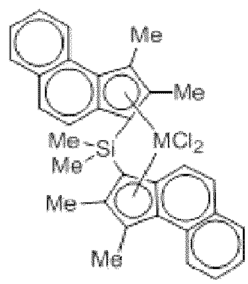

[Formula 2-13]

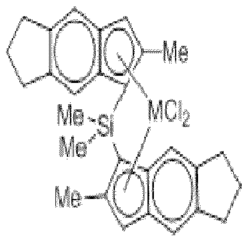

[Formula 2-14]

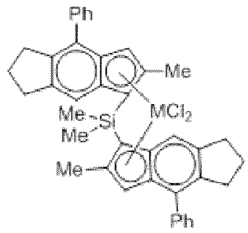

[Formula 2-15]

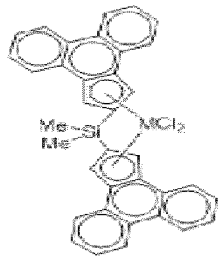

[Formula 2-16]

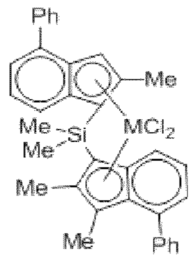

[Formula 2-17]

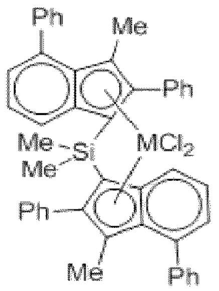

[Formula 2-18]

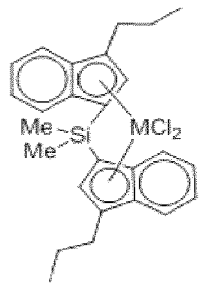

[Formula 2-19]

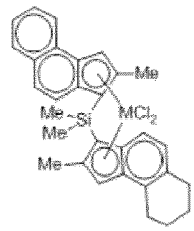

[Formula 2-20]

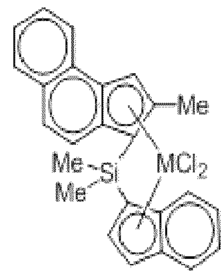

[Formula 2-21]

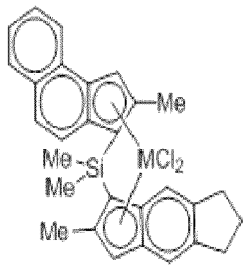

[Formula 2-22]

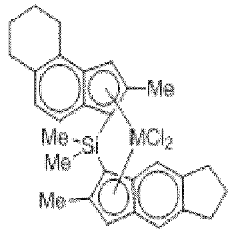

[Formula 2-23]

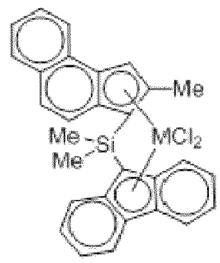

[Formula 2-24]

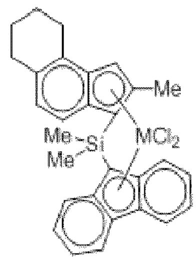

[Formula 2-25]

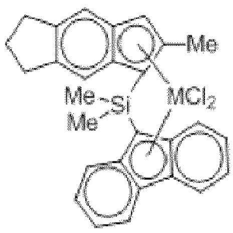

[Formula 2-26]

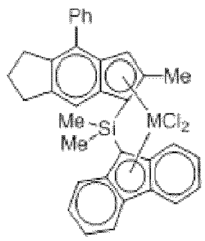

[Formula 2-27]

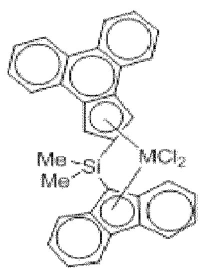

In the transition metal compounds, M is a group 4 transition metal of the periodic table of elements, such as

hafnium (Hf), zirconium (Zr), or titanium (Ti), Me is a methyl group, and Ph is a phenyl group.

The catalyst composition according to the present invention may include a cocatalyst compound including the transition metal compound and at least one compound selected from the group consisting of compounds represented by Formulae 3 to 6 below.

[Formula 3]

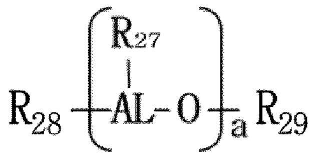

In Formula 3, AL is aluminum, $R_{27}$, $R_{28}$, and $R_{29}$ are each independently a halogen atom, a $C_1$-$C_{20}$ hydrocarbon group, or a $C_1$-$C_{20}$ hydrocarbon group substituted with a halogen, a is an integer of 2 or more, and Formula 3 is a compound having a repeating unit structure.

[Formula 4]

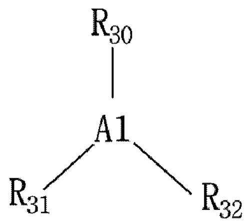

In Formula 4, A1 is aluminum or boron, $R_{30}$, $R_{31}$, and $R_{32}$ are each independently a halogen atom, a $C_1$-$C_{20}$ hydrocarbon group, a $C_1$-$C_{20}$ hydrocarbon group substituted with a halogen, or a $C_1$-$C_{20}$ alkoxy.

[Formula 5] $[L1\text{-}H]^+ [Z1(A2)_4]^-$

[Formula 6] $[L2]^+ [Z2(A3)_4]^-$

In Formulae 5 and 6, L1 and L2 are neutral or cationic Lewis acids, Z1 and Z2 are group 13 elements of the periodic table of elements, and A2 and A3 are a substituted or unsubstituted $C_6$-$C_{20}$ aryl group or a substituted or unsubstituted $C_1$-$C_{20}$ alkyl group.

The compound represented by Formula 3 is aluminoxane and is not particularly limited as long as the compound is general alkyl aluminoxane. For example, methylaluminoxane, ethylaluminoxane, isobutylaluminoxane, butylaluminoxane, and the like may be used. Specifically, methylaluminoxane may be used. The alkylaluminoxane may be prepared by a conventional method such as adding an appropriate amount of water to trialkylaluminum or reacting trialkylaluminum with a hydrocarbon compound or an inorganic hydrate salt containing water, and may be obtained in a mixed form of linear and cyclic aluminoxanes.

As the compound represented by Formula 4, for example, a conventional alkyl metal compound may be used. Specifically, trimethylaluminum, triethylaluminum, triisobutylaluminum, tripropylaluminum, tributylaluminum, dimethylchloroaluminum, triisopropylaluminum, tricyclopentylaluminum, tripentylaluminum, triisopentylaluminum, trihexylaluminum, trioctylaluminum, ethyldimethylaluminum, methyldiethylaluminum, triphenylaluminum, tri(p-tolyl)aluminum, dimethylaluminum methoxide, dimethylaluminum ethoxide, trimethylboron, triethylboron, triisobutylboron, tripropylboron, tributylboron, tripentafluorophenylboron, and the like may be used. More specifically, trimethylaluminum, triisobutylaluminum, tripentafluorophenylboron, and the like may be used.

Examples of the compound represented by Formula 5 or 6 may include methyldioctateylammonium tetrakis(pentafluorophenyl)borate, trimethylammonium tetrakis(phenyl)borate, triethylammonium tetrakis(phenyl)borate, tripropylammonium tetrakis(phenyl)borate, tributylammonium tetrakis(phenyl)borate, trimethylammonium tetrakis(p-tolyl)borate, tripropylammonium tetrakis(p-tolyl)borate, trimethylammonium tetrakis(o,p-dimethylphenyl)borate, triethylammonium tetrakis(o,p-dimethylphenyl)borate, trimethylammonium tetrakis(p-trifluoromethylphenyl)borate, tributylammonium tetrakis(p-trifluoromethylphenyl)borate, tributylammonium tetrakis(pentafluorophenyl)borate, diethylammonium tetrakis(pentafluorophenyl)borate, triphenylphosphonium tetrakis(phenyl)borate, trimethylphosphonium tetrakis(phenyl)borate, N,N-diethylanilinium tetrakis(phenyl)borate, N,N-dimethylanilinium tetrakis(pentafluorophenyl)borate, N,N-diethylanilinium tetrakis(pentafluorophenyl)borate, triphenylcarbonium tetrakis(p-trifluoromethylphenyl)borate, triphenylcarbonium tetrakis(pentafluorophenyl)borate, trimethylammonium tetrakis(phenyl)aluminate, triethylammonium tetrakis(phenyl)aluminate, tripropylammonium tetrakis(phenyl)aluminate, tributylammonium tetrakis(phenyl)aluminate, trimethylammonium tetrakis(p-tolyl)aluminate, tripropylammonium tetrakis(p-tolyl)aluminate, triethylammonium tetrakis(o,p-dimethylphenyl)aluminate, tributylammonium tetrakis(p-trifluoromethylphenyl)aluminate, trimethylammonium tetrakis(p-trifluoromethylphenyl)aluminate, tributylammonium tetrakis(pentafluorophenyl)aluminate, N,N-diethylanilinium tetrakis(phenyl)aluminate, N,N-diethylanilinium tetrakis(pentafluorophenyl)aluminate, diethylammonium tetrakis(pentafluorophenyl)aluminate, triphenylphosphonium tetrakis(phenyl)aluminate, and trimethylphosphonium tetrakis(phenyl) aluminate, but the present invention is not limited thereto. Specifically, methyldioctateylammonium tetrakis(pentafluorophenyl)borate ([HNMe(C18H37)2]+[B(C6F5)4]-), N,N-dimethylanilinium tetrakis(pentafluorophenyl)borate, triphenylcarbonium tetrakis(pentafluorophenyl)borate, and the like may be used. Specifically, methyldioctateylammonium tetrakis(pentafluorophenyl)borate ([HNMe(C18H37)2]+[B(C6F5)4]-), N,N-dimethylanilinium tetrakis(pentafluorophenyl)borate, triphenylcarbonium tetrakis(pentafluorophenyl)borate, and the like may be used.

In the production of the hybrid supported metallocene catalyst according to the present invention, a mass ratio of the transition metal (M1 of Formula 1 and M2 of Formula 2) to the carrier in the first and second metallocene compounds is preferably 1:1 to 1:1,000. The mass ratio may be preferably 1:100 to 1:500. When the carrier and the metallocene compound are contained at the above-described mass ratio, appropriate supported catalyst activity is exhibited, which is advantageous in maintaining the activity of the catalyst and achieving cost reduction.

In addition, a mass ratio of the cocatalyst compound represented by Formulae 5 and 6 to the carrier is preferably 1:20 to 20:1, and a mass ratio of the cocatalyst compound represented by Formulae 3 and 4 to the carrier is preferably 1:100 to 100:1.

The mass ratio of the first metallocene compound to the second metallocene compound is preferably 1:100 to 100:1. When the cocatalyst and the metallocene compound are contained at the above-described mass ratio, it is advantageous in maintaining the activity of the catalyst and achieving cost reduction.

As a carrier suitable for the production of the hybrid supported metallocene catalyst according to the present invention, a porous material having a large surface area may be used.

The first and second metallocene compounds and the cocatalyst compound may be a supported catalyst that is hybrid-supported on the carrier and used as the catalyst. The supported catalyst refers to a catalyst that is well dispersed so as to improve catalyst activity and maintain stability and is supported on a carrier for stable maintenance.

The hybrid support refers to not supporting the first and second metallocene compounds on the carriers but supporting the catalyst compound on the carrier in one step. Due to the reduction in production time and the reduction in amount of a solvent used, the hybrid support may be said to be much more cost-effective than individual supports. At this time the carrier is a solid that disperses and stably retains a material having a catalytic function, and is usually a material having a large porosity or a large area so as to be highly dispersed and supported to increase the exposed surface area of the material having the catalytic function. The carrier has to be stable mechanically, thermally, and chemically. Examples of the carrier include silica, alumina, titanium oxide, zeolite, zinc oxide, starch, and synthetic polymer, but the present invention is not limited thereto.

In addition, the carrier may have an average particle size of 10 microns to 250 microns, preferably 10 microns to 150 microns, and more preferably 20 microns to 100 microns. The carrier may have a microporous volume of 0.1 cc/g to 10 cc/g, preferably 0.5 cc/g to 5 cc/g, and more preferably 1.0 cc/g to 3.0 cc/g. In addition, the carrier may have a specific surface area of 1 $m^2/g$ to 1,000 $m^2/g$, preferably 100 $m^2/g$ to 800 $m^2/g$, and more preferably 200 $m^2/g$ to 600 $m^2/g$.

When the carrier is silica, silica may have a drying temperature of 200°C to 900°C. The drying temperature may be preferably 300°C to 800°C, and more preferably 400°C to 700°C. When the drying temperature is less than 200°C, too much moisture causes surface moisture to react with the cocatalyst. When the drying temperature exceeds 900°C, the structure of the catalyst collapses. The concentration of the hydroxyl group in the dried silica may be 0.1 mmol/g to 5 mmol/g, preferably from 0.7 mmol/g to 4 mmol/g, and more preferably 1.0 mmol/g to 2 mmol/g. When the concentration of the hydroxyl group is less than 0.5 mmol/g, the supported amount of the cocatalyst is lowered, and when the concentration of the hydroxyl group exceeds 5 mmol/g, the catalyst component is inactivated, which is not preferable.

The hybrid supported metallocene catalyst according to the present invention may be produced by activating the metallocene catalyst and supporting the activated metallocene catalyst on the carrier. In the production of the hybrid supported metallocene, the cocatalyst may be first supported on the carrier. The activation of the metallocene catalyst may be independently performed and may vary depending on the situation. That is, the first metallocene compound and the second metallocene compound may be mixed, activated, and then supported on the carrier. The first metallocene compound and the second metallocene compound may be supported after the cocatalyst compound is supported on the carrier.

Examples of the solvent of the reaction in the production of the hybrid supported metallocene catalyst include an aliphatic hydrocarbon solvent such as hexane or pentane, an aromatic hydrocarbon solvent such as toluene or benzene, a

hydrocarbon solvent substituted with a chlorine atom, such as dichloromethane, an ether-based solvent such as diethyl ether or tetrahydrofuran, and most organic solvents such as acetone or ethyl acetate. Toluene or hexane is preferable, but the present invention is not limited thereto.

The reaction temperature in the production of the catalyst is 0°C to 100°C, and preferably 25°C to 70°C, but the present invention is not limited thereto. In addition, the reaction time in the production of the catalyst is 3 minutes to 48 hours, and preferably 5 minutes to 24 hours, but the present invention is not limited thereto.

The first and second metallocene compounds may be activated by mixing (contacting) the cocatalyst compound. The mixing may be performed in an inert atmosphere, typically a nitrogen or argon atmosphere, without using a solvent, or in the presence of the hydrocarbon solvent.

In addition, the temperature in the activation of the first and second metallocene compounds may be 0°C to 100°C, and preferably 10°C to 30°C.

When the first and second metallocene compounds are activated with the cocatalyst compound, the stirring time may be 5 minutes to 24 hours, and preferably 30 minutes to 3 hours.

In the first and second metallocene compounds, the catalyst composition in a solution state, which is uniformly dissolved in the hydrocarbon solvent or the like, is used as it is. Alternatively, the first and second metallocene compound may be used in a solid powder state in which the solvent is removed and vacuum drying is performed for 20°C to 200°C for 1 hour to 48 hours. However, the present invention is not limited thereto.

The method for producing the high-density ethylene-based polymer according to the present invention includes preparing a polyolefin homopolymer or an ethylene-based copolymer by contacting the hybrid supported metallocene catalyst with at least one olefin monomer.

The method (polymerization reaction) for producing the high-density ethylene-based polymer according to the present invention may perform a polymerization reaction in a slurry phase using an autoclave reactor or a gas phase using a gas phase polymerization reactor. In addition, the respective polymerization reaction conditions may be variously modified according to the desired polymerization result of the polymerization method (slurry phase polymerization, gas phase polymerization) or the form of the polymer. The degree of the modification thereof may be easily performed by those of ordinary skill in the art.

When the polymerization is performed in a liquid phase or a slurry phase, a solvent or olefin itself may be used as a medium. Examples of the solvent may include propane, butane, pentane, hexane, octane, decane, dodecane, cyclopentane, methylcyclopentane, cyclohexane, methylcyclohexane, benzene, toluene, xylene, dichloromethane, chloroethane, dichloroethane, and chlorobenzene, and these solvents may be mixed at a predetermined ratio, but the present invention is not limited thereto.

In a specific example, examples of the olefin monomer may include ethylene, α-olefins, cyclic olefins, dienes, trienes, and styrenes, but the present invention is not limited thereto.

The α-olefins include a $C_3$-$C_{12}$ (for example, $C_3$-$C_8$) aliphatic olefin. Specific examples of the α-olefins may include propylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-aitosen, 4,4-dimethyl-1-pentene, 4,4-diethyl-1-hexene, and 3,4-dimethyl-1-hexene.

The α-olefins may be homopolymerized, or two or more olefins may be alternating, random, or block copolymerized. The copolymerization of the α-olefins may include copolymerization of ethylene and a $C_3$-$C_{12}$ (for example, $C_3$-$C_8$) α-olefin (specifically, ethylene and propylene, ethylene and 1-butene, ethylene and 1-hexene, ethylene and 4-methyl-1-pentene, ethylene and 1-octene, or the like) and copolymerization of propylene and a $C_4$-$C_{12}$ (for example, $C_4$-$C_8$) α-olefins (specifically, propylene and 1-butene, propylene and 4-methyl-1-pentene, propylene and 4-methyl-butene, propylene and 1-hexene, propylene and 1-octene, or the like). In the copolymerization of ethylene or propylene and another α-olefin, the amount of the other α--olefin may be 99 mol% or less of the total monomer, and preferably 80 mol% or less in the case of the ethylene copolymer.

Preferable examples of the olefin monomer may include ethylene, propylene, 1-butene, 1-hexene, 1-octene, 1-decene, or mixtures thereof, but the present invention is not limited thereto.

In the method for producing the high-density ethylene-based polymer according to the present invention, the amount of the catalyst composition used is not particularly limited. For example, in the polymerization reaction system, the central metal of the transition metal compound (M, group 4 transition metal) represented by Formulae 1 and 2 may have a concentration of $1\times10^{-5}$ mol/l to $9\times10^{-5}$ mol/l.

The central metal concentration affects the activity of the catalyst and the physical properties of the high-density ethylene-based polymer. When the central metal concentration of the first metallocene compound exceeds the above-described numerical range, the activity increases but the mechanical properties of the resin decreases. When the central metal concentration of the first metallocene compound is lower than the above-described numerical range, the activity decreases and the processability also decreases. Therefore, it is cost-ineffective. In addition, since the generation of static electricity increases in the gas phase reactor, stable operations are impossible.

In addition, when the central metal concentration of the second metallocene compound exceeds the above-described numerical range, the activity decreases and the physical properties increases, but the processability is lowered. When the central metal concentration of the second metallocene compound is less than the above-described numerical range, the activity increases but the mechanical properties decrease.

In addition, the temperature and pressure at the time of polymerization may be changed according to the reactant, the reaction condition, and the like, and are thus not particularly limited. However, in the case of the solution polymerization, the polymerization temperature may be 0°C to 200°C, and preferably 100°C to 180°C, and in the case of the slurry phase or gas phase polymerization, the polymerization temperature may be 0°C to 120°C, and preferably 60°C to 100°C.

In addition, the polymerization pressure may be 1 bar to 150 bar, preferably 30 bar to 90 bar, and more preferably 10 bar to 20 bar. The pressure may be applied by injecting an olefin monomer gas (for example, ethylene gas).

For example, the polymerization may be performed in a batch manner (for example, autoclave reactor) or a semi-continuous or continuous manner (for example, gas phase polymerization reactor). The polymerization may also be performed in two or more steps having different reaction conditions, and the molecular weight of the final polymer may be controlled by changing the polymerization temperature or injecting hydrogen into a reactor.

The high-density ethylene-based polymer according to the present invention may be obtained by ethylene homopolymerization or copolymerization of ethylene and $\alpha$-olefin using the hybrid supported metallocene compound as the catalyst and has a unimodal distribution.

Hereinafter, the high-density ethylene-based polymer according to the present invention will be described in detail.

The high-density ethylene-based polymer according to the present invention has a density of 0.930 g/cm$^3$ to 0.955 g/cm$^3$. When the density of the polymer is less than 0.930 g/cm$^3$, the polymer may not exhibit sufficiently high toughness. When the density of the polymer is greater than 0.955 g/cm$^3$, it is not preferable since the degree of crystallization becomes excessively large and brittle fracture easily occurs in a molded product.

Generally, when a melt index (MI) increases, moldability is improved, but impact resistance is deteriorated. On the contrary, when the MI is lowered, impact resistance and chemical resistance are improved, but melt flowability is deteriorated and moldability is significantly deteriorated. For this reason, in the case of increasing the MI so as to improve the moldability, a method is used which forms a short chain branched structure (reduction in density) through general copolymerization so as to prevent deterioration of impact resistance. However, since the reduction in the density of the ethylene-based polymer leads to deterioration of the toughness of the polymer, there is a limitation in a method for compensating impact resistance due to the reduction in density.

The melt flowability used herein mainly corresponds to an extrusion load at the time of extruding a molten resin from an extruder and has a close relationship (proportionality) with injection molding (moldability). MI, MFI, MFR, or the like is used as an index for the standard of the melt flowability. In the present invention, the MI (melt index) indicates flowability in a load of 2.16 kg at 190°C, and the MFI indicates flowability in a load of 21.6 kg at 190°C. The MFR indicates a ratio of MFI to MI, that is, MFI/MI.

The high-density ethylene-based polymer according to the present invention has an MI of 0.1 g/10 min to 10 g/10 min, and preferably 0.5 g/10 min to 10 g/10 min. When the MI is less than 0.1 g/10 min, molding processability is significantly deteriorated when the polymer is used as an injection molding material, and the appearance of the injection-molded product is poor. When the MI is greater than 10 g/10 min, the impact resistance is significantly lowered.

Unlike the conventional high-density polyethylene polymer, the high-density polyethylene polymer according to the present invention has a low MI, which can exhibit excellent impact resistance and chemical resistance, and also has a wide molecular weight distribution and a long chain branch, which can exhibit excellent injection moldability.

The high-density ethylene-based polymer according to the present invention has a weight average molecular weight (g/mol) of 60,000 to 250,000 and a molecular weight distribution (Mw/Mn) of 4 to 6.

The high-density ethylene-based polymer according to the present invention may have an MFR of 35 to 100, and more preferably 37 to 80. When the MFR is less than 35, molding processability is significantly deteriorated when the polymer is used as an injection molding material. When the MFR is greater than 100, mechanical properties are deteriorated.

In general, when the polyethylene resin is made to have a high molecular weight so as to secure a high environmental stress cracking resistance (ESCR), a melt flow rate (MFR) decreases. Hence, flowability is lowered, resulting in a reduction in productivity.

The high-density ethylene-based polymer according to the present invention has a low MI and thus has excellent mechanical strength, and includes a long chain branch to increase an MFR, thereby obtaining excellent processability.

At this time, the ESCR means resistance to external force causing stress cracking as described above. As the molecular weight distribution is wider or more long chain branch (LCB) and short chain branch (SCB) are included, the entanglement in the amorphous region increases and thus the environmental stress cracking resistance increases.

Since the hybrid supported catalyst according to the present invention includes the second metallocene compound as described above, the production of the long chain branch can be induced in the produced high-density

ethylene-based polymer. Therefore, a high-density ethylene-based polymer including a long chain branch (LCB) having a branch having 6 or more carbon atoms in a main chain can be produced.

Since the long chain branch (LCB) causes physical effects to fill an empty space between polymers, it is known to affect the viscosity and elasticity of the molten polymer. When the long chain branch in the polymer chain is increased and the entanglement of the polymer chain is strengthened, intrinsic viscosity at the same molecular weight is lowered. Therefore, low load is formed on the screw during extrusion and injection, thereby increasing processability. Since the high-density polyethylene resin according to the present invention has a low MI but includes a lot of long chain branches, the MFR is increased and thus the processability is more excellent than the conventional polyethylene resin.

A lamellar structure is formed while PE polymer chains form crystals and grow. When short chain branch (SCB) is formed in a PE main chain through the introduction of comonomer, the lamellar structure is too large to be included in a lamellar crystal structure. Hence, the lamellar structure hinders the smooth growth of the lamellar crystal structure of the main chain and serves to escape from the crystal structure. At this time, the PE main chain, which is kinked out of the lamellar, grows into another lamellar crystal structure, and a tie chain connecting lamellar to lamellar is generated.

It is known that in the case of C2/$\alpha$-olefin copolymers having the same density and molecular weight, as the chain length of the $\alpha$-olefin is shorter, the lamellar thickness becomes larger and the thickness ratio distribution becomes wider (Polym. J., 24, 9, 1992). That is, as more SCBs are included, the lamellar thickness becomes larger and the thickness distribution becomes wider.

FIG. 1 is a graph showing a lamellar thickness distribution of Example 1 prepared according to the present invention and Comparative Examples 1 and 2. Referring to FIG. 1, the ethylene-based polymer according to the present invention is characterized in that the average thickness of the lamellar is 9 nm to 1 nm and the lamellar distribution (Lw/Ln) is 1.1 or more. Preferably, the thickness of the lamellar is 9.2 nm to 10.7 nm.

The high-density ethylene-based polymer is characterized in that at least 50% of the lamellar has a thickness of less than 1 nm to 10 nm and less than 40% to 50% of the lamellar has a thickness in a range of 10 nm to 15 nm.

For Comparative Example 2, which was a copolymer of C2/1-octene, it was confirmed that the lamellar thickness was small and the distribution was narrow, as compared with Example 1 and Comparative Example 1.

For Example 1 and Comparative Example 1, which were a copolymer of C2/1-hexene, it was confirmed that the lamellar thickness distribution was similar, but the lamellar thickness was smaller in Example 1 than in Comparative Example 1. Since the LCB is included in Example 1 prepared according to the present invention, the lamellar thickness is smaller in Example 1 than in Comparative Example 1, which is the polyethylene having the same composition, and the presence of LCB increases the formation rate of tie molecules, obtaining remarkably excellent long-term pressure resistance characteristics.

In addition, the ethylene-based polymer according to the present invention has a low MI due to a high molecular weight distribution and a long chain branch, but increases melt tension, thereby improving tensile strength, flexural strength, flexural modulus, and scratchability. This serves as an important factor for stable production in the extrusion process, as compared with a conventional polyethylene resin pipe.

FIG. 2 is a graph showing complex viscosity of Example 1 and Comparative Example 1. x-axis represents frequency (rad/s) and y-axis represents complex viscosity (Poise). This graph is related to flowability. As the complex viscosity is high at low frequency and is low at high frequency, the flowability is great. This is said that a shear thinning phenomenon is great. Although the ethylene polymer according to the present invention has a low MI as compared with Comparative Example 1, it shows a remarkably excellent melt flowability due to a high shear thinning phenomenon. Therefore, it can be seen that the shear thinning effect is much better than that of the high-density ethylene-based polymer having a similar MI in the MI range of the present invention, 0.1 g/10 min to 10 g/10 min, thereby showing excellent flowability and processability.

The presence or absence of long chain branch in the ethylene-based polymer may be determined whether an inflection point is present on a van Gurp-Palmen graph measured using a rheometer or whether complex modulus (G*) tends to diverge as the size gets smaller.

Referring to the van Gurp-Palmen graph of Example 1 and Comparative Example 1 shown in FIG. 3, as the complex modulus value of the x-axis decreases, the phase angle of the y-axis diverges, and as the complex modulus value increases, the graph has the inflection point. Since it is confirmed that the behavior of the long chain branch does not appear in Comparative Example 1 and appears in Example 1, it can be confirmed that the ethylene-based polymer contains a lot of long chain branches.

The high-density ethylene-based polymer according to the present invention can be used as injection, extrusion, compression and rotational molding materials.

## Examples

Hereinafter, the structure and operation of the present invention will be described in more detail with reference to preferred examples of the present invention. However, these example are shown by way of illustration and should not be

construed as limiting the present invention in any way.

Since contents not described herein can be sufficiently technically inferred by those of ordinary skill in the art, descriptions thereof will be omitted.

1. Manufacture Example of First Metallocene Compound

Indene (5 g, 0.043 mol) was dissolved in hexane (150 ml). The mixture was sufficiently mixed and cooled to a temperature of -30°C. 2.5M n-butyllithium (n-BuLi) hexane solution (17 ml, 0.043 mol) was slowly dropped to the hexane solution and stirred at room temperature for 12 hours. A white suspension was filtered through a glass filter, and a white solid was sufficiently dried to obtain an indene lithium salt (yield: 99%).

In a slurry solution of the indene lithium salt (1.05 g, 8.53 mmol), $CpZrC_{13}$ (2.24 g, 8.53 mmol) was slowly dissolved in ether (30 mL) and then cooled to a temperature of -30°C. An indene lithium salt dissolved in ether (15 mL) was slowly dropped to the ether solution and stirred for 24 hours to obtain [indenyl(cyclopentadienyl)]$ZrCl_2$ (yield: 97%). Here, Cp indicates cyclopentadienyl.

2. Manufacture Example of Second Metallocene Compound

- Manufacture Example of Ligand Compound

2-methyl-4-bromo indene (2 g, 1 eq), $Pd(PPh_3)_4$ (553 mg, 0.05 eq), and 1-NaphB$(OH)_2$ (2.14 g, 1.3 eq) were added to a solution of tetrahydrofuran (THF) and MeOH (4:1, 40 ml), and degassed $K_2CO_3$ aqueous solution (2.0 M, 3.3 eq) was added thereto at room temperature. The mixture was stirred under reflux at a temperature of 80°C for 12 hours to obtain 2-methyl-4-(1-naphthyl)indene. 2-methyl-4-(1-naphthyl)indene was added to 50 mL of toluene, and n-BuLi (7.8 mL, 1.1 eq, 1.6 M in hexane) was slowly added thereto at a temperature of -30°C. The mixture was gradually heated to room temperature and stirred for 12 hours. A solid generated therefrom was filtered, washed with hexane, and dried under vacuum to obtain 2-methyl-4-(1-naphthyl)indenyl lithium.

$SiMe_2Cl_2$ (462 mg, 1 eq) was slowly added to 2-methyl-4-(1-naphthyl)indenyl lithium (1.88 g, 2 eq), 13 mL of toluene, and 3 mL of THF at a temperature of -30°C, and the mixture was gradually heated and stirred at a temperature of 55°C for 12 hours to obtain 1.97 g (97%) of dimethylbis{2-methyl-4-(1-naphthyl)indenyl)}silane.

- Manufacture Example of Second Metallocene Compound

The ligand compound (0.4 g, 1 eq) produced in Manufacture Example was added to 15 mL of THF, and n-BuLi (1.32 mL, 2.2 eq, 1.6 M in hexane) was slowly added thereto at a temperature of -30°C. The mixture was gradually heated to room temperature and stirred for 12 hours to obtain dilithium salt. $ZrCl_4$ (435 mg, 1 eq) was slowly added to a dilithium salt slurry solution and stirred for 12 hours. A solvent was removed therefrom under vacuum, and a product obtained therefrom was washed with THF and MC to obtain $Me_2Si${2-methyl-4-(1-indenyl)}$_2ZrCl_2$ (yield: 94%).

3. Manufacture Example of Hybrid Supported Metallocene Catalyst

The first and second metallocene compounds and methylaluminoxane (MAO) as the cocatalyst lost activity when reacted with moisture or oxygen in the air. Therefore, all experiments were performed under a nitrogen condition by using a glove box and a Schlenk technique. A 10L supported catalyst reactor was washed to remove foreign matter therefrom. The 10L supported catalyst reactor was closed while drying at a temperature of 110°C for 3 hours or more and was then in a state in which moisture or the like was completely removed using a vacuum.

10 wt% of methylalumoxane (MAO) solution (methylaluminoxane: 1,188 g) was added to 2.862 g of the compound produced in Manufacture Example of First Metallocene Compound and 3.469 g of the compound produced in Manufacture Example of Second Metallocene Compound, and the mixture was stirred at room temperature for 1 hour. After 300 g of silica (XPO2402) was added to the reactor, 900 mL of purified toluene was added to the reactor and then stirred. After the stirring step for 1 hour was completed, a first metallocene compound, a second metallocene compound, and a methylaluminoxane mixed solution were added to the reactor while stirring the reactor. The reactor was heated to a temperature of 60°C and stirred for 2 hours.

After a precipitation reaction, a supernatant was removed, washed with 1 L of toluene, and vacuum-dried at a temperature of 60°C for 12 hours.

Example 1

An olefin polymer was produced by adding the supported hybrid metallocene catalyst obtained in Manufacture

Example to a continuous polymerization reactor for a fluidized bed gas process (HCC 4203). 1-hexene was used as a comonomer, a 1-hexene/ethylene molar ratio was 0.299%, a reactor ethylene pressure was maintained at 15 bar, a hydrogen/ethylene mole ratio was 0.116%, and a polymerization temperature was maintained at 80°C to 90°C.

Comparative Example 1

A commercial product HDPE SP988 (manufactured by LG Chem, Ltd.) was used.

Comparative Example 1 has a density of 0.9426 g/cm$^3$ according to ASTM D1505 and a melt index (MI) of 0.7 g/10 min according to ASTM D1238.

Comparative Example 2

A commercial product HDPE DX900 (manufactured by SK Global Chemical Co., Ltd.) was used.

Comparative Example 2 has a density of 0.9384 g/cm$^3$ according to ASTM D1505 and a melt index (MI) of 0.64 g/10 min according to ASTM D1238.

<Physical Property Measurement Method>

1) A density was measured according to ASTM D1505.
2) MI and MFR
Melt flowability MI was an amount of extrusion for 10 minutes at a load of 2.16 kg and was measured at a measurement temperature of 190°C according to ASTM D1238. MFI indicates a ratio of MFI to MI, i.e., MFI/MI. MFI was an amount of extrusion for 10 minutes at a load of 21.6 kg and was measured at a measurement temperature of 190°C according to ASTM D1238.
3) Polydispersity index (PDI) indicates a ratio of Mw to Mn, i.e., Mw/Mn.
4) Long-term pressure resistance evaluation was performed according to PERT standard ISO 22391 measurement method.
5) Lamellar thickness and thickness distribution (Lw/Ln) measurement: Differential scanning calorimetry (DSC) was used, and step crystallization (SC) to which stepwise cooling was applied and successive self-nucleation and annealing (SSA) using a series of heating and cooling cycles were utilized.

Since partial melting of SSA leaves only the most stable crystals intact, it is annealed in the next step, while the molten chains are separated through self-nucleation and crystallization upon cooling. That is, thermal energy capable of dissolving incomplete crystals by heating scans is provided for each successive cycle step of SSA treatment, while annealing and crystal growth are completed in the preformed lamellar. Therefore, all melting and crystallization processes occurring during the standard DSC operation are accelerated in the heating scan of each partial step, and crystals remaining after the SSA treatment are closer to equilibrium. In the SSA thermal separation method, the main parameters were selected as follows.

The interval of the fractionation window or the self-nucleation temperature (Ts) was 5, the retention time at Ts was 5 minutes, and the heating and cooling scan rate in the heat treatment step was 10/min.

Each peak of the SSA-DSC endothermic curve represents a chain segment of a group with similar methylene sequence length (MSL). Since the heat flow, which is the signal strength in DSC measurement, is the product of the mass of the crystalline polymer melted at a specific temperature and the amount of heat of melting, DSC data are difficult to quantify. Therefore, in addition to the calibration curve for converting the melting temperature to short chain branch (SCB), another calibration curve is required to convert the heat flow into mass fraction. However, such a calibration curve was changed according to the nature of the polymer. Therefore, in order to solve the drawback, normalized heat flow was used for quantitative analysis on the assumption that the dependence of the amount of heat of melting on the melting temperature was negligible.

In order to measure the amount of material that melts at a specific temperature, a temperature axis is converted into a lamellar thickness or MSL. The first is to use the Thomson-Gibbs equation, and the second can be obtained by using an appropriate calibration curve in the literature (see Equation 2 below). First, the following Thomson-Gibbs equation (see Equation 1 below) was used to establish a relationship between the temperature and the lamellar thickness.

<Equation 1>

$$I=\frac{2\sigma Tm^{\circ}}{\Delta Hv(Tm^{\circ}-Tm)}$$

In Equation 1, I is a lamellar thickness (nm), $\Delta$Hv is a fusion enthalpy for a lamellar of an infinite thickness (here, $288\times10^{6}$ J/m$^2$ is substituted), $\sigma$ is lamellar surface free energy (here, $70\times10^{-3}$ J/m$^2$ is substituted), Tm is a melting temperature, and $T^0$m is an equilibrium melting temperature (here, $T^0$m value, 418.7K is substituted) for linear PE of an infinite thickness.

Then, the equilibrium melting temperature for the random copolymer, that is, the thermodynamic melting temperature (T°m) for crystals of an infinite thickness in the random copolymer, was calculated using the following Flory's equation (see Equation 2 below).

<Equation 2>

$$\frac{1}{T_m^c}=\frac{1}{T_m^o}-\frac{R\ln x}{\Delta H_u}$$

In Equation 2, $T^0$m is an equilibrium melting temperature of a lamellar of an infinite thickness in linear PE, R is an ideal gas constant, $\Delta H_u$ is the amount of molar melting heat of repeating units in the crystal, and x is a mole fraction of crystalline units in a random copolymer using an experimentally determined weight average short chain branch (SCB).

A lamellar thickness distribution was measured using the following Equations (3) to (5).

<Equation 3>

$$I=\frac{Lw}{Ln}$$

In Equation 3, Lw is a weighted average of ethylene sequence length (ESL), and Ln is an arithmetic mean of ethylene sequence length (ESL).

<Equation 4>

$$L_n=\frac{n_1L_1+n_2L_2+n_3L_3+,\cdots,+n_j+n_j}{n_1+n_2+n_3+,\cdots,+n_j}=\sum f_iL_i$$

In Equation 4, $n_i$ is a normalized partial area of a final DSC scan, and $L_i$ is a lamellar thickness.

<Equation 5>

$$L_w=\frac{n_1L_1^2+n_2L_2^2+n_3L_3^2+,\cdots,+n_jL_j^2}{n_1L_1+n_2L_2+n_3L_3+,\cdots,+n_jL_j}=\frac{\sum f_iL_i^2}{\sum f_iL_i}$$

In Equation 5, $n_i$ is a normalized partial area of a final DSC scan, and $L_i$ is a lamellar thickness.

Table 1 shows the polymerization conditions of Example 1.

[Table 1]

| | Ethylene pressure (bar) | Hydrogen/ethylene molar ratio (%) | 1-hexene/ethylene molar ratio (%) |
|---|---|---|---|
| Example 1 | 15.0 | 0.116 | 0.299 |

Table 2 shows the above-described physical property measurement data.

[Table 2]

| Unit | | Can no. | Example 1 | Comparative Example 1 | Comparative Example 2 |
|---|---|---|---|---|---|
| MI | | g/10min | 0.59 | 0.7 | 0.64 |
| MFI | | g/10min | 31.8 | 24.52 | 16.06 |
| MFR | | - | 54 | 35 | 25.1 |
| Density | | g/cm3 | 0.9420 | 0.9421 | 0.9384 |
| Tm | | °C | 128 | 127 | 126 |
| Crystallinity | | % | 66.3 | 69.3 | 63 |
| IR-GPC | Mn | g/mol | 35,100 | 34,200 | 50534.1 |
| | Mw | g/mol | 183,800 | 209,800 | 222350 |
| | PDI | - | 5.24 | 6.13 | 4.4 |
| | SCB | /1000C | 4.40 | 1.31 | 3.0 |

The ethylene-based polymer according to the present invention is characterized in that the lamellar average thickness is 9 nm to 11 nm, and preferably 9.2 nm to 10.7 nm. It was confirmed that Example 1 prepared according to the present invention has a similar lamellar distribution (Lw/Ln) of 1.1 but a small lamellar thickness of 9.9 nm, as compared with Comparative Example 1, which was polyethylene of the same composition.

Table 4 below shows a ratio (%) for each lamellar thickness.

[Table 4]

| | Lamellar size ratio (%) | | | Methylene sequence length (MSL) | | |
|---|---|---|---|---|---|---|
| | Example 1 | Comparative Example 1 | Comparative Example 2 | Example 1 | Comparative Example 1 | Comparative Example 2 |
| 2-3nm | 1.4 | 1.4 | 1.5 | 130.8 | 131.2 | 129.2 |
| 3-4nm | 5.5 | 4.2 | 5.0 | 159.0 | 159.8 | 156.1 |
| 4-5nm | 7.1 | 4.5 | 5.4 | 106.1 | 111.5 | 104.5 |
| 5-6nm | 12.0 | 8.1 | 9.7 | 144.7 | 147.6 | 140.3 |
| 6-7nm | - | 0 | 8.4 | - | - | 95.4 |
| 7-8nm | 8.6 | 7.3 | 0 | 100.2 | 100.5 | - |
| 8-9nm | 16.4 | 15.7 | 15.3 | 137.9 | 138.3 | 127.8 |
| 9-10nm | 0 | 0 | 0 | - | - | - |
| 10-11nm | 0 | 0 | 0 | | | |
| 11-12nm | 0 | 0 | 54.7 | | | 221.2 |
| 12-13nm | 48.6 | 58.7 | 0 | 227.4 | 252.6 | |

Example 1 prepared according to the present invention is characterized in that at least 50% of the lamellar has a thickness of less than 1 nm to 10 nm and less than 40% to 50% of the lamellar has a thickness in a range of 10 nm to 15 nm. In addition, it is confirmed that the lamellar thickness of 12 nm to 13 nm was in a range of 48% to 50%, the lamellar thickness of 12 nm to 13 nm was in a range of 48% to 50%, the lamellar thickness of 8 nm to 9 nm was in a range of 15% to 17%, the lamellar thickness of 7 nm to 8 nm was in a range of 7% to 9%, the lamellar thickness of 5 nm to 6 nm was in a range of 11% to 13%, the lamellar thickness of 4 nm to 5 nm was in a range of 6% to 8%, the lamellar thickness of 3 nm to 4 nm was in a range of 4% to 6%, and the lamellar thickness of 2 nm to 3 nm was in a range of 1% to 3%.

Table 5 below shows the results of IPT measurement for long-term pressure resistance evaluation.

[Table 5]

| Evaluation temperature | Hoop stress | Example 1 | Comparative Example 1 | Comparative Example 2 |
|---|---|---|---|---|
| 20°C | 13.4MPa | 5.72 hr | 3.58 hr | 0.2 hr |
| | | 5.36 hr | 3.69 hr | 0.34 hr |
| 95°C | 4.8Mpa | 20.12 hr | 7.56 hr | 4 sec |

As shown in Table 5, it was confirmed that the breakdown time of Example 1 occurred later than Comparative Examples 1 and 2 at 20°C and 95°C in the on-site long-term pressure resistance evaluation (IPT measurement result). This shows that the long-term pressure resistance characteristics of Example 1 prepared according to the present invention are superior to those of Comparative Examples 1 and 2.

Table 6 below shows the KCL measurement results.

[Table 6]

| Evaluation temperature | Hoop stress, MPa | Breakdown time | |
|---|---|---|---|
| | | Example 1 | Comparative Example 1 |
| | | 0.943 $g/cm^3$ | 0.9428 $g/cm^3$ |
| 20°C | 13.4 | - | 3.2 |
| | 12.0 | - | 34.1 |
| | 10.83 | - | - |
| 95°C | 4.8 | 73 (Ductile) | 11.5 |

As shown in Table 6, Example 1 prepared according to the present invention exhibited excellent elongation characteristics at 95°C in the long-term pressure resistance evaluation according to the KCL measurement method, as compared with Comparative Example 1. This shows that tie molecules are well formed due to the presence of LCB in Example 1 and toughness and ESCR characteristics are reinforced, as compared with Comparative Example 1. That is, it was confirmed that Example 1 showed excellent long-term pressure resistance characteristics, as compared with Comparative Example 1.

The present invention can provide a polyethylene polymer that satisfies the balance of excellent mechanical characteristics and molding processability, as compared with a conventional ethylene-based polymer, and a pipe using the same.

The present invention can provide an ethylene-based polymer having a wide molecular weight distribution and a small lamellar thickness, thereby increasing tie molecules and obtaining excellent long-term pressure resistance characteristics, and a pipe using the same.

The present invention can also provide a high-density ethylene-based polymer including a long chain branch by using a metallocene catalyst, thereby obtaining excellent productivity due to low load during processing such as extrusion, compression, injection, and rotational molding, and a pipe using the same.

In producing the hybrid supported metallocene, since the asymmetric structure of the first metallocene of Formula 1 of the present invention does not have the same electron donating phenomenon of giving electrons from the ligand to the central metal, the bond lengths between the central metal and the ligand are different from each other. Therefore, the steric hindrance received when the monomer approaches the catalytic active site is low.

The second metallocene compound represented by Formula 2 has a bridge structure to protect the catalytic active site and facilitate the approach of the comonomer to the catalytic active site. Therefore, the second metallocene compound has excellent comonomer intrusion characteristics. In addition, the catalytic activity site is stabilized as compared with the non-bridge structure in which the ligands are not linked to each other, thereby forming a high molecular weight.

While the present invention has been particularly shown and described with reference to exemplary embodiments thereof, the present invention is not limited to the specific exemplary embodiments. It will be understood by those of ordinary skill in the art that various modifications may be made thereto without departing from the scope of the present invention as defined by the appended claims, and such modifications fall within the scope of the claims.

## Claims

1. A high-density ethylene-based polymer produced by polymerization of ethylene and at least one monomer selected from the group consisting of α-olefin-based monomers,

   wherein a density according to ASTM D1505 is 0.930 g/cm$^3$ to 0.955 g/cm$^3$,
   an MI according to ASTM D1238 is 0.1 g/10 min to 10 g/10 min,
   a weight average molecular weight (g/mol) is 60,000 to 250,000,
   a molecular weight distribution (Mw/Mn) is 4 to 6, and
   an average thickness of lamellar is 9 nm to 11 nm and a lamellar distribution (Lw/Ln) is 1.1 or more, wherein the lamellar thickness and thickness distribution (Lw/Ln) are measured as described in the description,
   wherein the MI is an amount of extrusion for 10 minutes at a load of 2.16 kg and is measured at a measurement temperature of 190°C according to ASTM D1238,
   wherein, when the high-density ethylene-based polymer is a copolymer of the ethylene and the α-olefin-based monomer, a content of the α-olefin-based monomer is 0.1 wt% to 10 wt%,
   wherein 48% to 50% of the lamellar in the high-density ethylene-based polymer has a thickness in a range of 12 nm to 13 nm,
   wherein 15% to 17% of the lamellar in the high-density ethylene-based polymer has a thickness in a range of 8 nm to 9 nm,
   wherein 7% to 9% of the lamellar in the high-density ethylene-based polymer has a thickness in a range of 7 nm to 8 nm,
   wherein 11% to 13% of the lamellar in the high-density ethylene-based polymer has a thickness in a range of 5 nm to 6 nm,
   wherein 6% to 8% of the lamellar in the high-density ethylene-based polymer has a thickness in a range of 4 nm to 5 nm,
   wherein 4% to 6% of the lamellar in the high-density ethylene-based polymer has a thickness in a range of 3 nm to 4 nm, and
   wherein 1% to 3% of the lamellar in the high-density ethylene-based polymer has a thickness in a range of 2 nm to 3 nm.

2. The high-density ethylene-based polymer of claim 1, wherein the high-density ethylene-based polymer comprises a long chain branch (LCB) and/or
   wherein the α-olefin-based monomers comprise at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, 1-hexadecene, and 1-aitosen.

3. The high-density ethylene-based polymer of claim 1, wherein the high-density ethylene-based polymer is polymerized by using a hybrid supported metallocene catalyst comprising at least one first metallocene compound represented by Formula 1 below, at least one second metallocene compound represented by Formula 2 below, at least one cocatalyst compound, and a carrier:

[Formula 1]

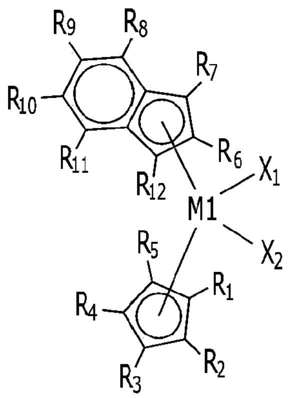

wherein, in Formula 1,

M1 is a group 4 transition metal of the periodic table of elements,
$X_1$ and $X_2$ are each independently one of halogen atoms,
$R_1$ to $R_{12}$ are each independently a hydrogen atom, a substituted or unsubstituted $C_1$-$C_{10}$ alkyl group, a substituted or unsubstituted $C_6$-$C_{20}$ aryl group, or a substituted or unsubstituted $C_7$-$C_{40}$ alkylaryl group and are linked to each other to form a ring,
cyclopentadiene linked to $R_1$ to $R_5$ and indene linked to $R_6$ to $R_{12}$ have an asymmetric structure having different structures, and
the cyclopentadiene and the indene are not linked to each other to form a non-bridge structure:

[Formula 2]

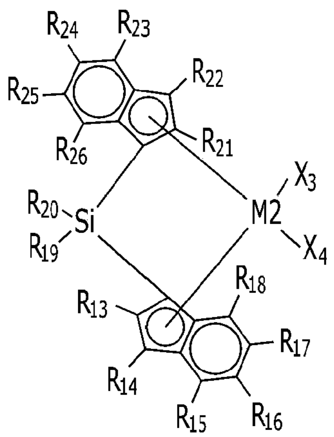

wherein, in Formula 2,
M2 is a group 4 transition metal of the periodic table of elements,
$X_3$ and $X_4$ are each independently one of halogen atoms,
$R_{13}$ to $R_{18}$ are each independently a hydrogen atom, a substituted or unsubstituted $C_1$-$C_{10}$ alkyl group, a substituted or unsubstituted $C_6$-$C_{20}$ aryl group or a substituted or unsubstituted $C_7$-$C_{40}$ alkylaryl group and are linked to each other to form a ring,
$R_{21}$ to $R_{26}$ are each independently a hydrogen atom, a substituted or unsubstituted $C_1$-$C_{10}$ alkyl group, a substituted or unsubstituted $C_6$-$C_{20}$ aryl group, or a substituted or unsubstituted $C_7$-$C_{40}$ alkylaryl group and are linked to each other to form a ring,
$R_{19}$ and $R_{20}$ are each independently a substituted or unsubstituted $C_1$-$C_{20}$ alkyl group and are linked to each other to form a ring,
indene linked to $R_{13}$ to $R_{18}$ and indene linked to $R_{21}$ to $R_{26}$ have the same structure or different structures, and the indene linked to $R_{13}$ to $R_{18}$ and the indene linked to $R_{21}$ to $R_{26}$ are linked to Si to form a bridge structure.

**4.** The high-density ethylene-based polymer of claim 3, wherein the first metallocene compound comprises at least one compound selected from the group consisting of compounds having the following structures:

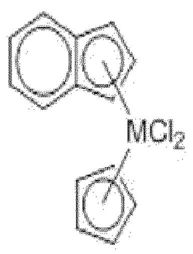
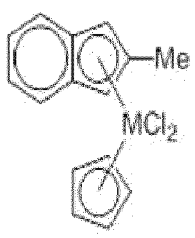
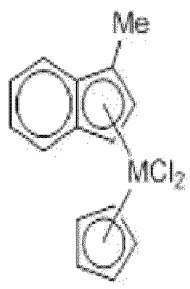
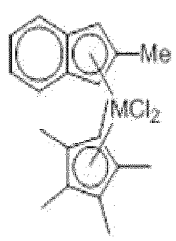

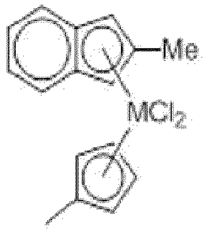
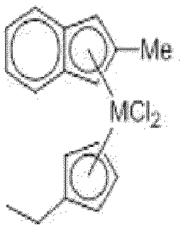
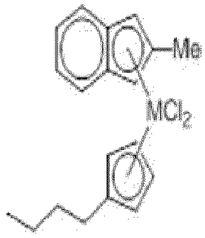
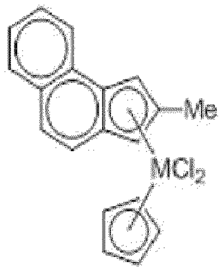

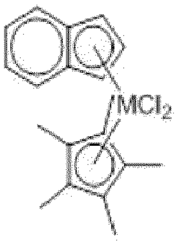
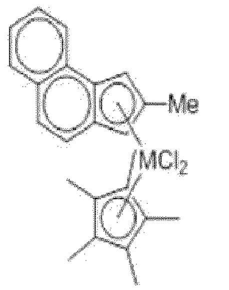
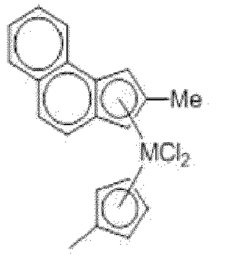
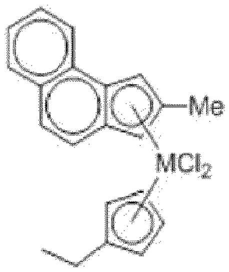

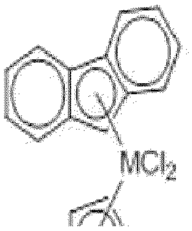
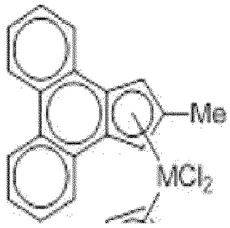
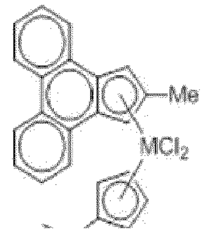
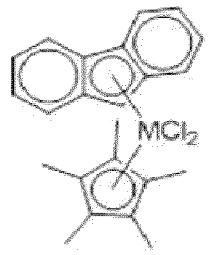

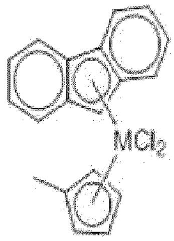
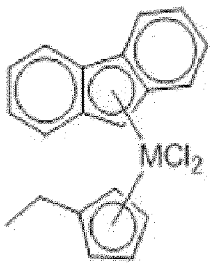
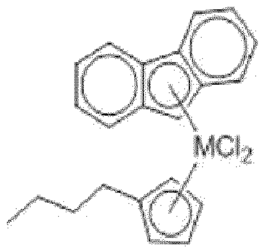

and/or

wherein the second metallocene compound comprises at least one compound selected from the group consisting of compounds having the following structures:

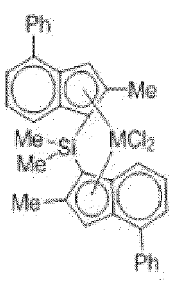
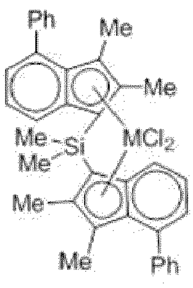
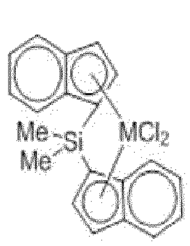
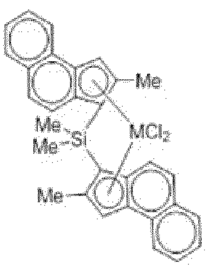

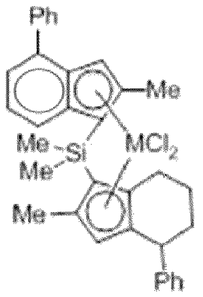
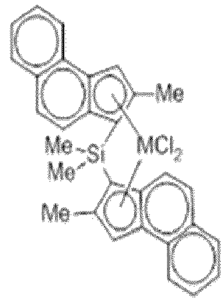
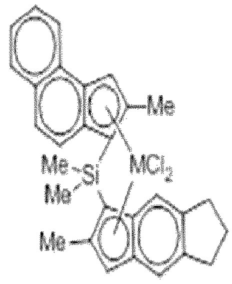
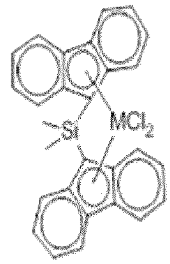

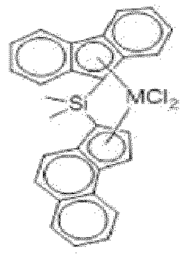
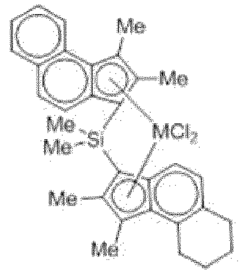
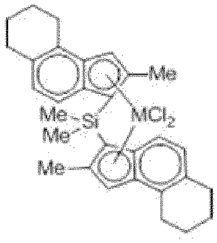
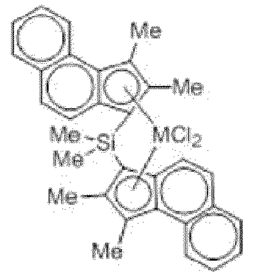

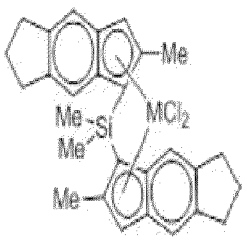
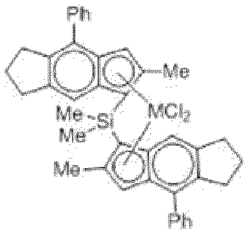
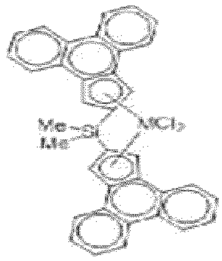
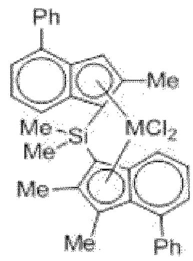

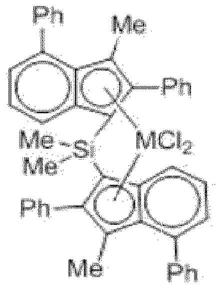
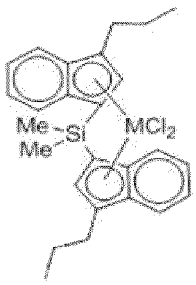
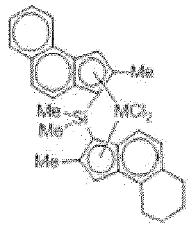
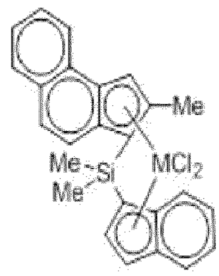

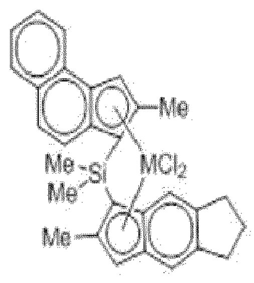
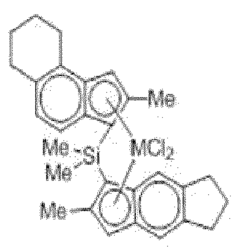
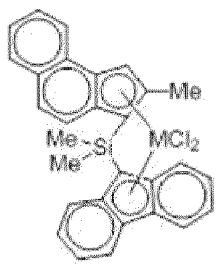
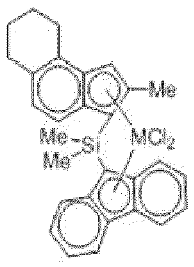

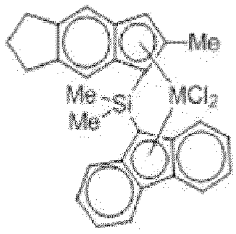

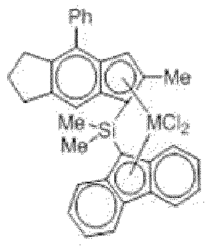

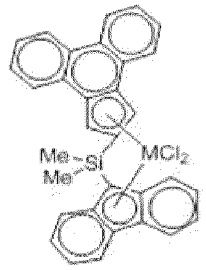

5. The high-density ethylene-based polymer of claim 3 or 4, wherein the cocatalyst compound comprises one or more of compounds represented by Formulae 3 to 6:

[Formula 3]

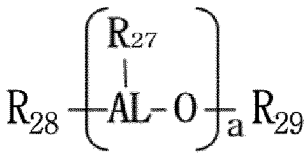

wherein, in Formula 3,

AL is aluminum,
$R_{27}$, $R_{28}$, and $R_{29}$ are each independently a halogen atom, a $C_1$-$C_{20}$ hydrocarbon group, or a $C_1$-$C_{20}$ hydrocarbon group substituted with a halogen, and
a is an integer of 2 or more:

[Formula 4]

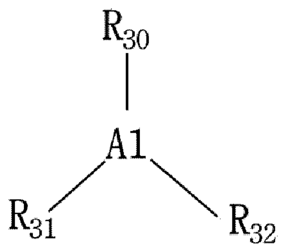

wherein, in Formula 4,
A1 is aluminum or boron, and
$R_{30}$, $R_{31}$, and $R_{32}$ are each independently a halogen atom, a $C_1$-$C_{20}$ hydrocarbon group, a $C_1$-$C_{20}$ hydrocarbon group substituted with a halogen, or a $C_1$-$C_{20}$ alkoxy:

[Formula 5] $[L1\text{-}H]^+ [Z1(A2)_4]^-$

[Formula 6] $[L2]^+ [Z2(A3)_4]^-$

wherein, in Formulae 5 and 6,
L1 and L2 are each independently neutral or cationic Lewis acids,
Z1 and Z2 are each independently group 13 elements of the periodic table of elements, and
A2 and A3 are each independently a substituted or unsubstituted $C_6$-$C_{20}$ aryl group or a substituted or unsubstituted $C_1$-$C_{20}$ alkyl group.

6. The high-density ethylene-based polymer of claim 5, wherein the cocatalyst compound represented by Formula 3 comprises at least one selected from the group consisting of methylaluminoxane, ethylaluminoxane, isobutylaluminoxane, and butylaluminoxane and/or

wherein the cocatalyst compound represented by Formula 4 comprises at least one compound selected from the group consisting of trimethylaluminum, triethylaluminum, triisobutylaluminum, tripropylaluminum, tributylaluminum, dimethylchloroaluminum,triisopropylaluminum, tricyclopentylaluminum, tripentylaluminum, triisopentylaluminum, trihexylaluminum, trioctylaluminum, ethyldimethylaluminum, methyldiethylaluminum, triphenylaluminum, tri(p-tolyl)aluminum, dimethylaluminum methoxide, dimethylaluminum ethoxide, trimethylboron, triethylboron, triisobutylboron, tripropylboron, tributylboron, and tripentafluorophenylboron and/or
wherein the cocatalyst compound represented by Formula 5 or 6 each independently comprises at least one selected from the group consisting of methyldioctateylammonium tetrakis(pentafluorophenyl)borate, trimethylammonium tetrakis(phenyl)borate, triethylammonium tetrakis(phenyl)borate, tripropylammonium tetrakis(phenyl)borate, tributylammonium tetrakis(phenyl)borate, trimethylammonium tetrakis(p-tolyl) borate, tripropylammonium tetrakis(p-tolyl)borate, trimethylammonium tetrakis(o,p-dimethylphenyl)borate, triethylammonium tetrakis(o,p-dimethylphenyl)borate, trimethylammonium tetrakis(p-trifluoromethylphenyl)borate, tributylammonium tetrakis(p-trifluoromethylphenyl)borate, tributylammonium tetrakis(pentafluorophenyl)borate, diethylammonium tetrakis(pentafluorophenyl)borate, triphenylphosphonium tetrakis(phenyl)borate, trimethylphosphonium tetrakis(phenyl)borate, N,N-diethylanilinium tetrakis(phenyl)borate, N,N-dimethylanilinium tetrakis(pentafluorophenyl)borate, N,N-diethylanilinium tetrakis(pentafluorophenyl)borate, triphenylcarbonium tetrakis(p-trifluoromethylphenyl)borate, triphenylcarbonium tetrakis(pentafluorophenyl)borate, trimethylammonium tetrakis(phenyl)aluminate, triethylammonium tetrakis(phenyl)aluminate, tripropylammonium tetrakis(phenyl) aluminate, tributylammonium tetrakis(phenyl)aluminate, trimethylammonium tetrakis(p-tolyl)aluminate, tripropylammonium tetrakis(p-tolyl)aluminate, triethylammonium tetrakis(o,p-dimethylphenyl)aluminate, tributylammonium tetrakis(p-trifluoromethylphenyl)aluminate, tributylammonium tetrakis(pentafluorophenyl)aluminate, N,N-diethylanilinium tetrakis(phenyl)aluminate, N,N-diethylanilinium tetrakis(pentafluorophenyl)aluminate, diethylammonium tetrakis(pentafluorophenyl)aluminate, tetrakis(pentafluorophenyl)aluminate, triphenylphosphonium tetrakis(phenyl)aluminate, and trimethylphosphonium tetrakis(phenyl)aluminate.

**7.** The high-density ethylene-based polymer of any one of claims 3 to 6, wherein a mass ratio of a total mass of the transition metals of the first metallocene compound and the second metallocene compound to the carrier is 1:1 to 1:1,000, and
a mass ratio of the first metallocene compound to the second metallocene compound is 1:100 to 100:1.

**8.** The high-density ethylene-based polymer of claim 5, wherein a mass ratio of the cocatalyst compounds represented by Formulae 3 and 4 to the carrier is 1:100 to 100:1, and
a mass ratio of the cocatalyst compounds represented by Formulae 5 and 6 to the carrier is 1:20 to 20:1.

**9.** The high-density ethylene-based polymer of any one of claims 3 to 8, wherein the carrier comprises at least one selected from the group consisting of silica, alumina, titanium oxide, zeolite, zinc oxide, and starch.

**10.** Use of the high-density ethylene-based polymer of claim 1 for injection, extrusion, compression, or rotational molding.

**11.** A method for producing the high-density ethylene-based polymer of claim 1, the method comprising:

(a) preparing at least one first metallocene compound represented by Formula 1 below, at least one second metallocene compound represented by Formula 2 below, and at least one cocatalyst compound:
(b) preparing a catalyst mixture by stirring the prepared at least one first metallocene compound, the prepared at least one second metallocene compound, and the prepared at least one cocatalyst compound at 0°C to 100°C for 5 minutes to 24 hours;
(c) preparing a hybrid supported catalyst composition by adding the catalyst mixture to a reactor in which a carrier and a solvent are present and stirring at 0°C to 100°C for 3 minutes to 48 hours; and
(d) introducing the hybrid supported catalyst composition, at least one $\alpha$-olefin monomer selected from the group consisting of $\alpha$-olefins, and ethylene into an autoclave reactor or a gas phase polymerization reactor and polymerizing the high-density ethylene-based polymer according to claim 1 in an environment in which a temperature is 60°C to 100°C and a pressure is 10 bar to 20 bar:

[Formula 1]

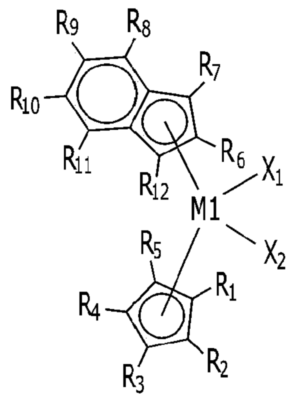

wherein, in Formula 1,

M1 is a group 4 transition metal of the periodic table of elements,
$X_1$ and $X_2$ are each independently one of halogen atoms,
$R_1$ to $R_{12}$ are each independently a hydrogen atom, a substituted or unsubstituted $C_1$-$C_{10}$ alkyl group, a substituted or unsubstituted $C_6$-$C_{20}$ aryl group, or a substituted or unsubstituted $C_7$-$C_{40}$ alkylaryl group and may be linked to each other to form a ring,
cyclopentadiene linked to $R_1$ to $R_5$ and indene linked to $R_6$ to $R_{12}$ have an asymmetric structure having different structures, and
the cyclopentadiene and the indene form a non-bridge structure since the cyclopentadiene and the indene are not linked to each other:

[Formula 2]

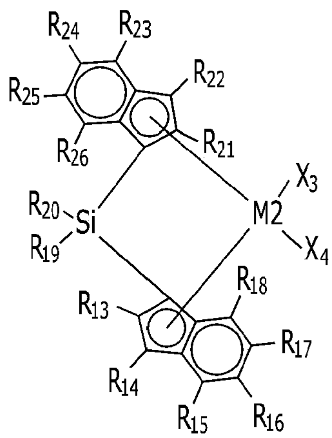

wherein, in Formula 2,
M2 is a group 4 transition metal of the periodic table of elements,
$X_3$ and $X_4$ are each independently one of halogen atoms,
$R_{13}$ to $R_{18}$ are each independently a hydrogen atom, a substituted or unsubstituted $C_1$- $C_{10}$ alkyl group, a substituted or unsubstituted $C_6$-$C_{20}$ aryl group, or a substituted or unsubstituted $C_7$-$C_{40}$ alkylaryl group and are linked to each other to form a ring,
$R_{21}$ to $R_{26}$ are each independently a hydrogen atom, a substituted or unsubstituted $C_1$-$C_{10}$ alkyl group, a substituted or unsubstituted $C_6$-$C_{20}$ aryl group, or a substituted or unsubstituted $C_7$-$C_{40}$ alkylaryl group and are linked to each other to form a ring,
$R_{19}$ and $R_{20}$ are each independently a substituted or unsubstituted $C_1$-$C_{20}$ alkyl group and are linked to each

other to form a ring,
indene linked to $R_{13}$ to $R_{18}$ and indene linked to $R_{21}$ to $R_{26}$ have the same structure or different structures, and the indene linked to $R_{13}$ to $R_{18}$ and the indene linked to $R_{21}$ to $R_{26}$ are linked to Si to form a bridge structure.

**12.** The method of claim 11, wherein the cocatalyst compound comprises one or more of compounds represented by Formulae 3 to 6:

[Formula 3]

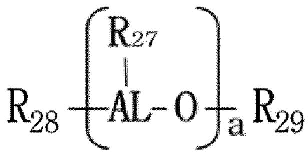

wherein, in Formula 3,

AL is aluminum,
$R_{27}$, $R_{28}$, and $R_{29}$ are each independently a halogen atom, a $C_1$-$C_{20}$ hydrocarbon group, or a $C_1$-$C_{20}$ hydrocarbon group substituted with a halogen, and
a is an integer of 2 or more:

[Formula 4]

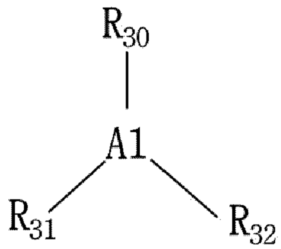

wherein, in Formula 4,
A1 is aluminum or boron, and
$R_{30}$, $R_{31}$, and $R_{32}$ are each independently a halogen atom, a $C_1$-$C_{20}$ hydrocarbon group, a $C_1$-$C_{20}$ hydrocarbon group substituted with a halogen, or a $C_1$-$C_{20}$ alkoxy:

[Formula 5] $[L1\text{-}H]^+ [Z1(A2)_4]^-$

[Formula 6] $[L2]^+ [Z2(A3)_4]^-$

wherein, in Formulae 5 and 6,
L1 and L2 are each independently neutral or cationic Lewis acids,
Z1 and Z2 are each independently group 13 elements of the periodic table of elements, and
A2 and A3 are each independently a substituted or unsubstituted $C_6$-$C_{20}$ aryl group or a substituted or unsubstituted $C_1$-$C_{20}$ alkyl group.

**13.** The method of claim 11 or 12, wherein the step (c) comprises:

separating a supernatant by performing a precipitation reaction on the hybrid supported catalyst composition;
removing the separated supernatant and washing a remaining catalyst composition precipitate with a solvent; and
vacuum-drying the washed catalyst composition precipitate at 20°C to 200°C for 1 hour to 48 hours.

**14.** The method of any one of claims 11 to 13, wherein the α-olefin monomers comprise at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, 1-hexadecene, and 1-aitosen.

**15.** A pipe using the high-density ethylene-based polymer of any one of claims 1 to 9.

**Patentansprüche**

**1.** Hochdichtes Polymer auf Ethylenbasis, hergestellt durch Polymerisation von Ethylen und mindestens einem Monomer, ausgewählt aus der Gruppe bestehend aus Monomeren auf α-Olefinbasis,

wobei eine Dichte gemäß ASTM D1505 0,930 g/cm$^3$ bis 0,955 g/cm$^3$ beträgt,
ein MI gemäß ASTM D1238 0,1 g/10 min bis 10 g/10 min beträgt,
ein gewichtsmittleres Molekulargewicht (g/mol) 60.000 bis 250.000 beträgt,
eine Molekulargewichtsverteilung (Mw/Mn) von 4 bis 6 und
eine durchschnittliche Dicke der Lamellen 9 nm bis 11 nm beträgt und eine Lamellenverteilung (Lw/Ln) 1,1 oder mehr beträgt, wobei die Lamellendicke und die Dickenverteilung (Lw/Ln) wie in der Beschreibung beschrieben gemessen werden,
wobei der MI eine Extrusionsmenge für 10 Minuten bei einer Last von 2,16 kg ist und bei einer Messtemperatur von 190°C gemäß ASTM D1238 gemessen wird,
wobei, wenn das hochdichte Polymer auf Ethylenbasis ein Copolymer aus dem Ethylen und dem Monomer auf α-Olefinbasis ist, ein Gehalt des Monomers auf α-Olefinbasis 0,1 Gew.-% bis 10 Gew.-% beträgt,
wobei 48 % bis 50 % der Lamellen in dem hochdichten Polymer auf Ethylenbasis eine Dicke im Bereich von 12 nm bis 13 nm aufweisen,
wobei 15 % bis 17 % der Lamellen in dem hochdichten Polymer auf Ethylenbasis eine Dicke im Bereich von 8 nm bis 9 nm aufweisen,
wobei 7 % bis 9 % der Lamellen in dem hochdichten Polymer auf Ethylenbasis eine Dicke im Bereich von 7 nm bis 8 nm aufweisen,
wobei 11% bis 13% der Lamellen in dem hochdichten Polymer auf Ethylenbasis eine Dicke im Bereich von 5 nm bis 6 nm aufweisen,
wobei 6 % bis 8 % der Lamellen in dem hochdichten Polymer auf Ethylenbasis eine Dicke im Bereich von 4 nm bis 5 nm aufweisen,
wobei 4 % bis 6 % der Lamellen in dem hochdichten Polymer auf Ethylenbasis eine Dicke im Bereich von 3 nm bis 4 nm aufweisen, und

wobei 1 % bis 3 % der Lamellen in dem hochdichten Polymer auf Ethylenbasis eine Dicke in einem Bereich von 2 nm bis 3 nm aufweisen.

**2.** Hochdichtes Polymer auf Ethylenbasis nach Anspruch 1, wobei das hochdichte Polymer auf Ethylenbasis eine langkettige Verzweigung (LCB) umfasst und/oder
wobei die Monomere auf α-Olefinbasis mindestens eines umfassen, das aus der Gruppe ausgewählt ist, die aus Propylen, 1-Buten, 1-Penten, 4-Methyl-1-penten, 1-Hexen, 1-Hepten, 1-Octen, 1-Decen, 1-Undecen, 1-Dodecen, 1-Tetradecen, 1-Hexadecen und 1-Aitosen besteht.

**3.** Hochdichtes Polymer auf Ethylenbasis nach Anspruch 1, wobei das hochdichte Polymer auf Ethylenbasis unter Verwendung eines hybriden geträgerten Metallocenkatalysators polymerisiert wird, der mindestens eine durch die unten stehende Formel 1 dargestellte erste Metallocenverbindung, mindestens eine durch die unten stehende Formel 2 dargestellte zweite Metallocenverbindung, mindestens eine Cokatalysatorverbindung und einen Träger umfasst:

[Formel 1]

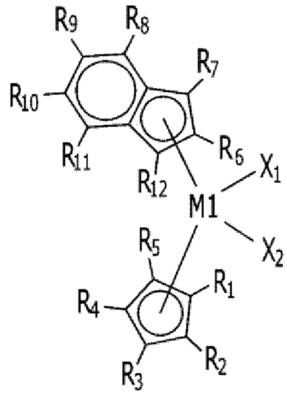

wobei in Formel 1,

M1 ein Übergangsmetall der Gruppe 4 des Periodensystems der Elemente ist,
$X_1$ und $X_2$ jeweils unabhängig voneinander eines aus Halogenatomen sind,
$R_1$ bis $R_{12}$ jeweils unabhängig voneinander ein Wasserstoffatom, eine substituierte oder unsubstituierte $C_1$-$C_{10}$-Alkylgruppe, eine substituierte oder unsubstituierte $C_6$-$C_{20}$-Arylgruppe oder eine substituierte oder unsubstituierte $C_7$-$C_{40}$-Alkylarylgruppe sind und miteinander verbunden sind, um einen Ring zu bilden,
das an $R_1$ bis $R_5$ gebundene Cyclopentadien und das an $R_6$ bis $R_{12}$ gebundene Inden eine asymmetrische Struktur mit unterschiedlichen Strukturen aufweisen, und
das Cyclopentadien und das Inden nicht miteinander verbunden sind, um eine Nicht-Brückenstruktur zu bilden:

[Formel 2]

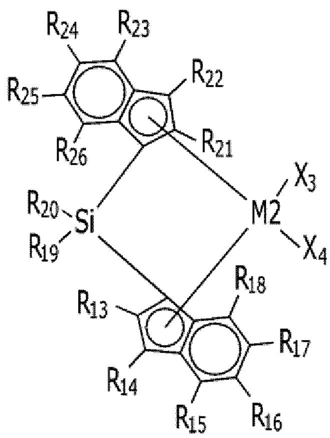

wobei in Formel 2,

M2 ein Übergangsmetall der Gruppe 4 des Periodensystems der Elemente ist,
$X_3$ und $X_4$ jeweils unabhängig voneinander eines aus Halogenatomen sind,
$R_{13}$ bis $R_{18}$ jeweils unabhängig voneinander ein Wasserstoffatom, eine substituierte oder unsubstituierte $C_1$-$C_{10}$-Alkylgruppe, eine substituierte oder unsubstituierte $C_6$-$C_{20}$-Arylgruppe oder eine substituierte oder unsubstituierte $C_7$-$C_{40}$-Alkylarylgruppe sind und miteinander verbunden sind, um einen Ring zu bilden,
$R_{21}$ bis $R_{26}$ jeweils unabhängig voneinander ein Wasserstoffatom, eine substituierte oder unsubstituierte $C_1$-$C_{10}$-Alkylgruppe, eine substituierte oder unsubstituierte $C_6$-$C_{20}$-Arylgruppe oder eine substituierte oder unsubstituierte $C_7$-$C_{40}$-Alkylarylgruppe sind und miteinander verbunden sind, um einen Ring zu bilden,
$R_{19}$ und $R_{20}$ jeweils unabhängig voneinander eine substituierte oder unsubstituierte $C_1$-$C_{20}$-Alkylgruppe sind und miteinander verbunden sind, um einen Ring zu bilden,
das mit $R_{13}$ bis $R_{18}$ verknüpfte Inden und das mit $R_{21}$ bis $R_{26}$ verknüpfte Inden die gleiche Struktur oder

unterschiedliche Strukturen aufweisen und
das an $R_{13}$ bis $R_{18}$ gebundene Inden und das an $R_{21}$ bis $R_{26}$ gebundene Inden an Si gebunden sind, um eine Brückenstruktur zu bilden.

**4.** Hochdichtes Polymer auf Ethylenbasis nach Anspruch 3, wobei die erste Metallocenverbindung mindestens eine Verbindung umfasst, die aus der Gruppe ausgewählt ist, die aus Verbindungen mit den folgenden Strukturen besteht:

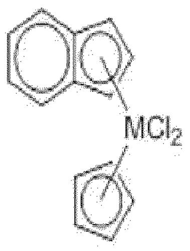
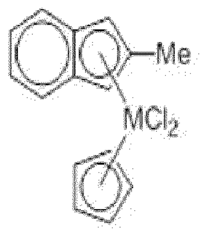
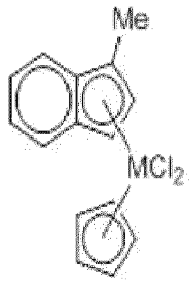
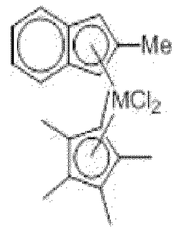
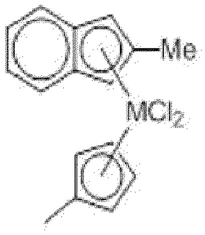
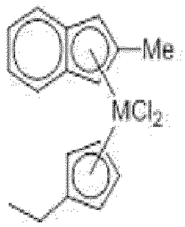
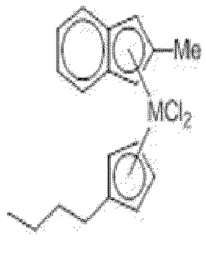
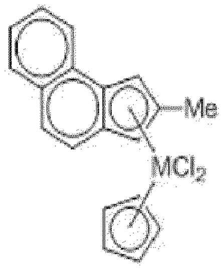
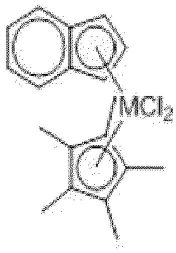
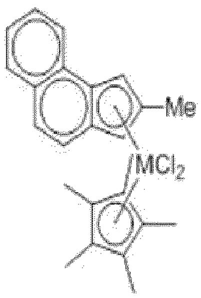
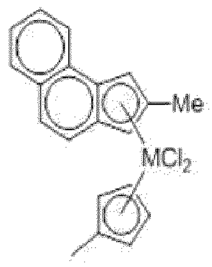
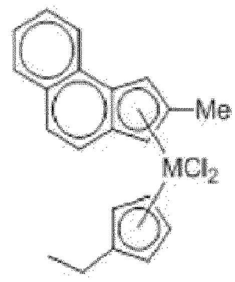
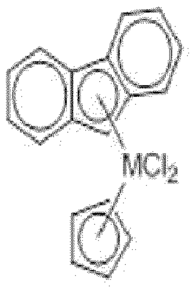
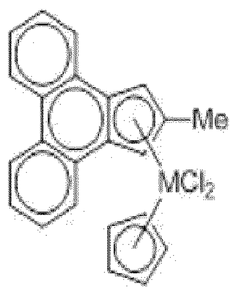
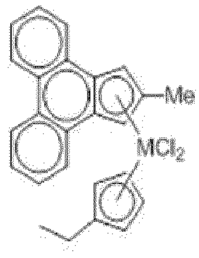
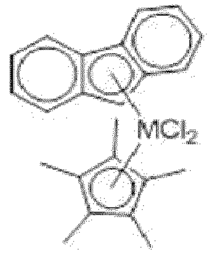
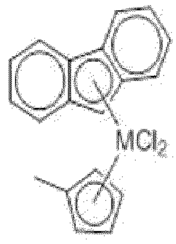
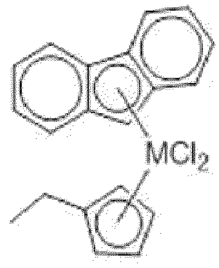
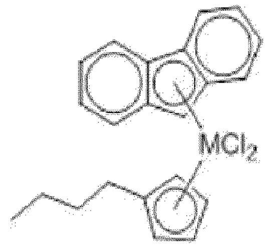

und/oder wobei die zweite Metallocenverbindung mindestens eine Verbindung umfasst, die aus der Gruppe ausgewählt ist, die aus Verbindungen mit den folgenden Strukturen besteht:

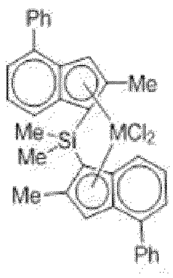
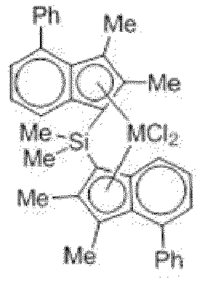
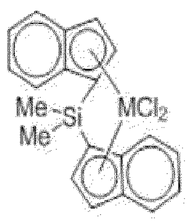
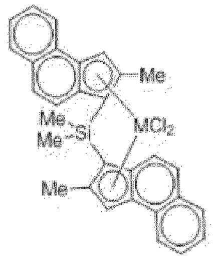
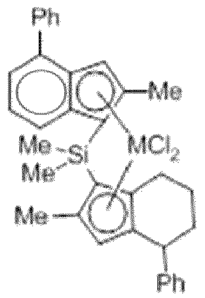
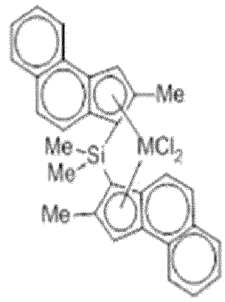
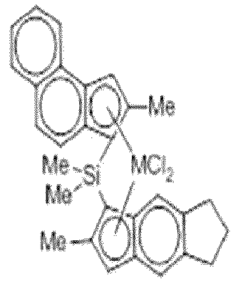
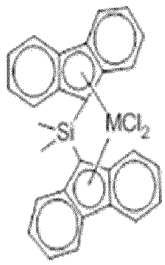
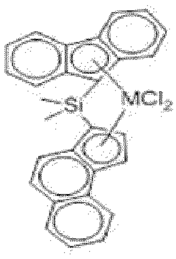
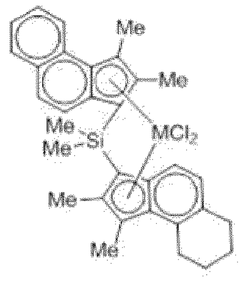
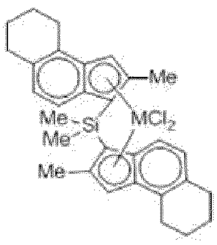
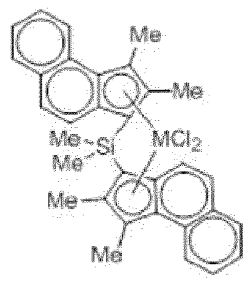
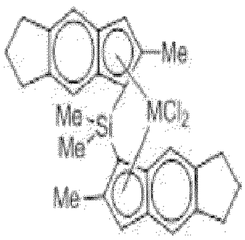
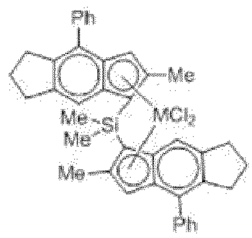
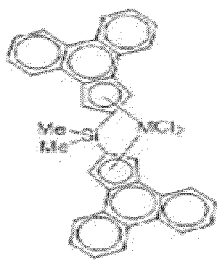
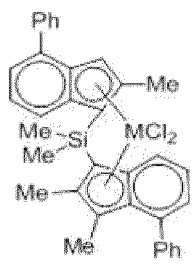
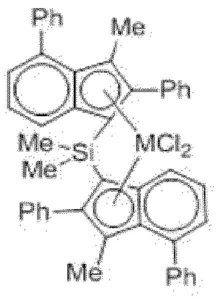
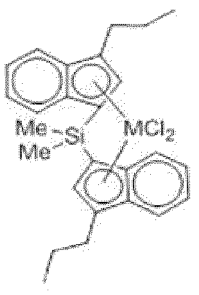
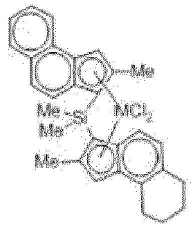
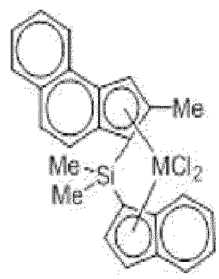

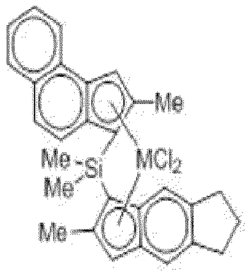
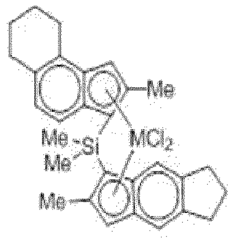
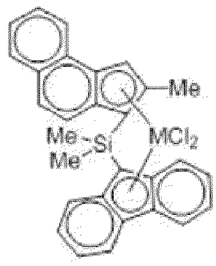
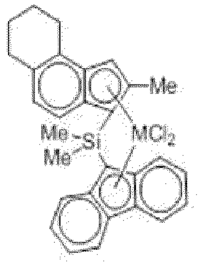

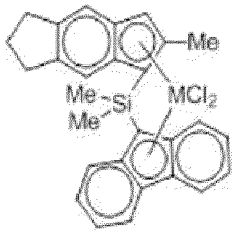
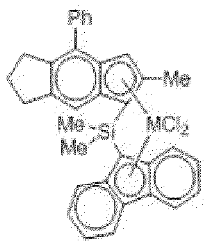
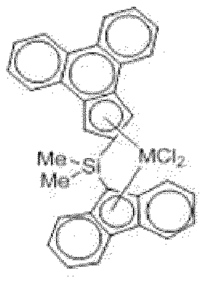

**5.** Hochdichtes Polymer auf Ethylenbasis nach Anspruch 3 oder 4, wobei die Cokatalysatorverbindung eine oder mehrere der durch die Formeln 3 bis 6 dargestellten Verbindungen umfasst:

[Formel 3]

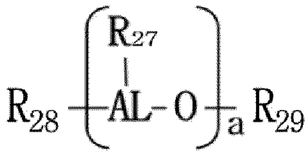

wobei in Formel 3,

AL Aluminium ist,
$R_{27}$, $R_{28}$ und $R_{29}$ jeweils unabhängig voneinander ein Halogenatom, eine $C_1$-$C_{20}$-Kohlenwasserstoffgruppe oder eine mit einem Halogen substituierte $C_1$-$C_{20}$-Kohlenwasserstoffgruppe sind, und
a eine ganze Zahl von 2 oder mehr ist:

[Formel 4]

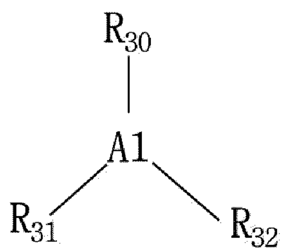

wobei in Formel 4,
A1 Aluminium oder Bor ist, und
$R_{30}$, $R_{31}$ und $R_{32}$ jeweils unabhängig voneinander ein Halogenatom, eine $C_1$-$C_{20}$-Kohlenwasserstoffgruppe, eine $C_1$-$C_{20}$-Kohlenwasserstoffgruppe, die mit einem Halogen substituiert ist oder ein $C_1$-$C_{20}$-Alkoxy sind:

[Formel 5] $[L1\text{-}H]^+ [Z1(A2)_4]^-$

[Formel 6] $[L2]^+ [Z2(A3)_4]^-$

wobei in den Formeln 5 und 6,
L1 und L2 jeweils unabhängig voneinander neutrale oder kationische Lewis-Säuren sind,
Z1 und Z2 jeweils unabhängig voneinander Elemente der Gruppe 13 des Periodensystems der Elemente sind, und
A2 und A3 jeweils unabhängig voneinander eine substituierte oder unsubstituierte $C_6$-$C_{20}$-Arylgruppe oder eine substituierte oder unsubstituierte $C_1$-$C_{20}$-Alkylgruppe sind.

**6.** Hochdichtes Polymer auf Ethylenbasis nach Anspruch 5, wobei die durch Formel 3 dargestellte Cokatalysatorverbindung mindestens eine Verbindung umfasst, die aus der Gruppe ausgewählt ist, die aus Methylaluminoxan, Ethylaluminoxan, Isobutylaluminoxan und Butylaluminoxan besteht, und/oder

wobei die durch Formel 4 dargestellte Cokatalysatorverbindung mindestens eine Verbindung umfasst, die aus der Gruppe ausgewählt ist, die aus Trimethylaluminium, Triethylaluminium, Triisobutylaluminium, Tripropylaluminium, Tributylaluminium, Dimethylchloraluminium, Triisopropylaluminium, Tricyclopentylaluminium, Tripentylaluminium, Trisopentylaluminium, Trihexylaluminium, Trioctylaluminium, Ethyldimethylaluminium, Methyldiethylaluminium, Triphenylaluminium, Tri(p-tolyl)aluminium, Dimethylaluminiummethoxid, Dimethylaluminiumethoxid, Trimethylboron, Triethylboron, Triisobutylboron, Tripropylboron, Tributylboron und Tripentafluorphenylboron und/oder
wobei die durch die Formel 5 oder 6 dargestellte Cokatalysatorverbindung jeweils unabhängig voneinander mindestens eine Verbindung umfasst, die aus der Gruppe ausgewählt ist, die aus Methyldioctateylammoniumtetrakis(pentafluorophenyl)borat, Trimethylammoniumtetrakis(phenyl)borat Triethylammoniumtetrakis(phenyl)borat, Tripropylammoniumtetrakis(phenyl)borat, Tributylammoniumtetrakis(phenyl)borat, Trimethylammoniumtetrakis(p-tolyl)borat, Tripropylammoniumtetrakis(p-tolyl)borat, Trimethylammoniumtetrakis(o, p-dimethylphenyl)borat, Triethylammoniumtetrakis(o,p-dimethylphenyl)borat, Trimethylammoniumtetrakis(p-trifluormethylphenyl)borat, Tributylammoniumtetrakis(p-trifluormethylphenyl)borat, Tributylammoniumtetrakis(Pentafluorphenyl)borat, Diethylammoniumtetrakis(pentafluorophenyl)borat, Triphenylphosphoniumtetrakis(phenyl)borat, Trimethylphosphoniumtetrakis(phenyl)borat, N,N-Diethylaniliniumtetrakis(phenyl)borat, N,N-Dimethylaniliniumtetrakis(pentafluorophenyl)borat, N,N-Diethylaniliniumtetrakis(pentafluorphenyl)borat, Triphenylcarboniumtetrakis(p-trifluormethylphenyl)borat, Triphenylcarboniumtetrakis(pentafluorphenyl)borat, Trimethylammoniumtetrakis(phenyl)aluminat, Triethylammoniumtetrakis(phenyl)aluminat, Tripropylammoniumtetrakis(phenyl)aluminat, Tributylammoniumtetrakis(phenyl)aluminat, Trimethylammoniumtetrakis(p-tolyl)aluminat, Tripropylammoniumtetrakis(p-tolyl)aluminat, Triethylammoniumtetrakis(o, p-Dimethylphenyl)aluminat, Tributylammoniumtetrakis(p-trifluormethylphenyl)aluminat, Tributylammoniumtetrakis(pentafluorphenyl)aluminat, N,N-Diethylaniliniumtetrakis(phenyl)aluminat, N, N-Diethylaniliniumtetrakis(pentafluorphenyl)aluminat, Diethylammoniumtetrakis(pentafluorphenyl)aluminat, Tetrakis(pentafluorphenyl)aluminat, Triphenylphosphoniumtetrakis(phenyl)aluminat und Trimethylphosphoniumtetrakis(phenyl)aluminat besteht.

**7.** Hochdichtes Polymer auf Ethylenbasis nach einem der Ansprüche 3 bis 6, wobei ein Massenverhältnis einer Gesamtmasse der Übergangsmetalle der ersten Metallocenverbindung und der zweiten Metallocenverbindung zum Träger 1:1 bis 1:1.000 beträgt, und
ein Massenverhältnis der ersten Metallocenverbindung zur zweiten Metallocenverbindung 1:100 bis 100:1 beträgt.

**8.** Hochdichtes Polymer auf Ethylenbasis nach Anspruch 5, wobei ein Massenverhältnis der durch die Formeln 3 und 4 dargestellten Cokatalysatorverbindungen zum Träger 1:100 bis 100:1 beträgt, und
ein Massenverhältnis der durch die Formeln 5 und 6 dargestellten Cokatalysatorverbindungen zu dem Träger 1:20 bis 20:1 beträgt.

**9.** Hochdichtes Polymer auf Ethylenbasis nach einem der Ansprüche 3 bis 8, wobei der Träger mindestens eines ausgewählt aus der Gruppe bestehend aus Siliciumdioxid, Aluminiumoxid, Titanoxid, Zeolith, Zinkoxid und Stärke enthält.

**10.** Verwendung des hochdichten Polymers auf Ethylenbasis nach Anspruch 1 zum Spritzgießen, Extrudieren, Formpressen oder Rotationsgießen.

**11.** Verfahren zur Herstellung des hochdichten Polymers auf Ethylenbasis nach Anspruch 1, wobei das Verfahren

umfasst:

(a) Herstellen mindestens einer ersten Metallocenverbindung, dargestellt durch die unten stehende Formel 1, mindestens einer zweiten Metallocenverbindung, dargestellt durch die unten stehende Formel 2, und mindestens einer Cokatalysatorverbindung:
(b) Herstellen einer Katalysatormischung durch Rühren der hergestellten mindestens einen ersten Metallocenverbindung, der hergestellten mindestens einen zweiten Metallocenverbindung und der hergestellten mindestens einen Cokatalysatorverbindung bei 0°C bis 100°C für 5 Minuten bis 24 Stunden;
(c) Herstellen einer hybriden Trägerkatalysatorzusammensetzung durch Zugeben der Katalysatormischung zu einem Reaktor, in dem ein Träger und ein Lösungsmittel vorhanden sind, und Rühren bei 0°C bis 100°C für 3 Minuten bis 48 Stunden; und
(d) Einbringen der hybriden geträgerten Katalysatorzusammensetzung, mindestens eines $\alpha$-Olefinmonomers, ausgewählt aus der Gruppe, bestehend aus $\alpha$-Olefinen, und Ethylen in einen Autoklavenreaktor oder einen Gasphasenpolymerisationsreaktor und Polymerisieren des hochdichten Polymers auf Ethylenbasis gemäß Anspruch 1 in einer Umgebung, in der eine Temperatur von 60°C bis 100°C und ein Druck von 10 bar bis 20 bar herrscht:

[Formel 1]

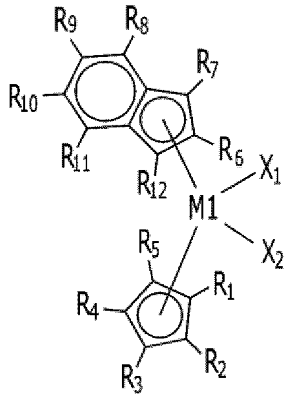

wobei in Formel 1,

M1 ein Übergangsmetall der Gruppe 4 des Periodensystems der Elemente ist,
$X_1$ und $X_2$ jeweils unabhängig voneinander eines aus Halogenatomen sind,
$R_1$ bis $R_{12}$ jeweils unabhängig voneinander ein Wasserstoffatom, eine substituierte oder unsubstituierte $C_1$-$C_{10}$-Alkylgruppe, eine substituierte oder unsubstituierte $C_6$-$C_{20}$-Arylgruppe oder eine substituierte oder unsubstituierte $C_7$-$C_{40}$-Alkylarylgruppe sind und miteinander verbunden sind, um einen Ring zu bilden,
das an $R_1$ bis $R_5$ gebundene Cyclopentadien und das an $R_6$ bis $R_{12}$ gebundene Inden eine asymmetrische Struktur mit unterschiedlichen Strukturen aufweisen, und
das Cyclopentadien und das Inden nicht miteinander verbunden sind, um eine Nicht-Brückenstruktur zu bilden:

[Formel 2]

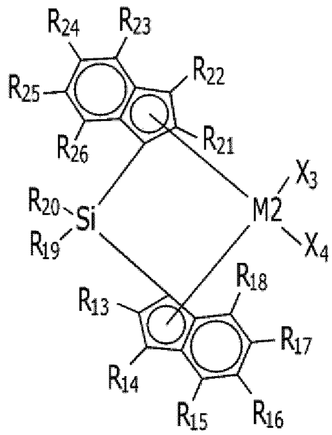

wobei in Formel 2,
M2 ein Übergangsmetall der Gruppe 4 des Periodensystems der Elemente ist,
$X_3$ und $X_4$ jeweils unabhängig voneinander eines aus Halogenatomen sind, $R_{13}$ bis $R_{18}$ jeweils unabhängig voneinander ein Wasserstoffatom, eine substituierte oder unsubstituierte $C_1$-$C_{10}$-Alkylgruppe, eine substituierte oder unsubstituierte $C_6$-$C_{20}$-Arylgruppe oder eine substituierte oder unsubstituierte $C_7$-$C_{40}$-Alkylarylgruppe sind und miteinander verbunden sind, um einen Ring zu bilden,
$R_{21}$ bis $R_{26}$ jeweils unabhängig voneinander ein Wasserstoffatom, eine substituierte oder unsubstituierte $C_1$-$C_{10}$-Alkylgruppe, eine substituierte oder unsubstituierte $C_6$-$C_{20}$-Arylgruppe oder eine substituierte oder unsubstituierte $C_7$-$C_{40}$-Alkylarylgruppe sind und miteinander verbunden sind, um einen Ring zu bilden,
$R_{19}$ und $R_{20}$ jeweils unabhängig voneinander eine substituierte oder unsubstituierte $C_1$-$C_{20}$-Alkylgruppe sind und miteinander verbunden sind, um einen Ring zu bilden,
das mit $R_{13}$ bis $R_{18}$ verknüpfte Inden und das mit $R_{21}$ bis $R_{26}$ verknüpfte Inden die gleiche Struktur oder unterschiedliche Strukturen aufweisen und
das an $R_{13}$ bis $R_{18}$ gebundene Inden und das an $R_{21}$ bis $R_{26}$ gebundene Inden an Si gebunden sind, um eine Brückenstruktur zu bilden.

**12.** Verfahren nach Anspruch 11, wobei die Cokatalysatorverbindung eine oder mehrere der durch Formeln 3 bis 6 dargestellten Verbindungen umfasst:

[Formel 3]

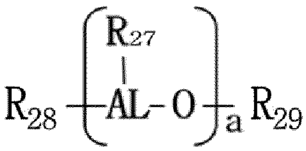

wobei in Formel 3,

AL Aluminium ist,
$R_{27}$, $R_{28}$ und $R_{29}$ jeweils unabhängig voneinander ein Halogenatom, eine $C_1$-$C_{20}$-Kohlenwasserstoffgruppe oder eine mit einem Halogen substituierte $C_1$-$C_{20}$-Kohlenwasserstoffgruppe sind, und
a eine ganze Zahl von 2 oder mehr ist:

[Formel 4]

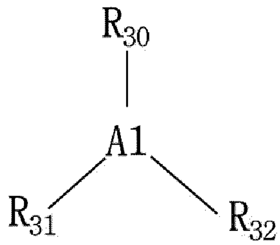

wobei in Formel 4,
A1 Aluminium oder Bor ist, und
$R_{30}$, $R_{31}$ und $R_{32}$ jeweils unabhängig voneinander ein Halogenatom, eine $C_1$-$C_{20}$-Kohlenwasserstoffgruppe, eine $C_1$-$C_{20}$-Kohlenwasserstoffgruppe, die mit einem Halogen substituiert ist oder ein $C_1$-$C_{20}$-Alkoxy sind:

[Formel 5] $[L1\text{-}H]^+ [Z1(A2)_4]^-$

[Formel 6] $[L2]^+ [Z2(A3)_4]^-$

wobei in den Formeln 5 und 6,
L1 und L2 jeweils unabhängig voneinander neutrale oder kationische Lewis-Säuren sind,
Z1 und Z2 jeweils unabhängig voneinander Elemente der Gruppe 13 des Periodensystems der Elemente sind, und
A2 und A3 jeweils unabhängig voneinander eine substituierte oder unsubstituierte $C_6$-$C_{20}$-Arylgruppe oder eine substituierte oder unsubstituierte $C_1$-$C_{20}$-Alkylgruppe sind.

**13.** Verfahren nach Anspruch 11 oder 12, wobei der Schritt (c) umfasst:

Abtrennen eines Überstandes durch Durchführen einer Fällungsreaktion an der hybriden geträgerten Katalysatorzusammensetzung;
Entfernen des abgetrennten Überstandes und Waschen eines verbleibenden Katalysatorzusammensetzungsniederschlags mit einem Lösungsmittel; und
Vakuumtrocknen des gewaschenen Niederschlags der Katalysatorzusammensetzung bei 20°C bis 200°C für 1 Stunde bis 48 Stunden.

**14.** Verfahren nach einem der Ansprüche 11 bis 13, wobei die $\alpha$-Olefinmonomere mindestens eines umfassen, das ausgewählt ist aus der Gruppe bestehend aus Propylen, 1-Buten, 1-Penten, 4-Methyl-1-penten, 1-Hexen, 1-Hepten, 1-Octen, 1-Decen, 1-Undecen, 1-Dodecen, 1-Tetradecen, 1-Hexadecen und 1-Aitosen.

**15.** Rohr das hochdichte Polymers auf Ethylenbasis nach einem der Ansprüche 1 bis 9 verwendend.

## Revendications

**1.** Polymère à base d'éthylène haute densité produit par une polymérisation d'éthylène et au moins un monomère sélectionné à partir du groupe consistant en des monomères à base d'$\alpha$-oléfine,
dans lequel une densité conformément à l'ASTM D1505 s'étend de 0,930 g/cm$^3$ à 0,955 g/cm$^3$ :

un indice de fluidité (melt index, MI) conformément à l'ASTM D1238 s'étend de 0,1 g/10 min à 10 g/10 min ;
un poids moléculaire moyen en poids (g/mol) s'étend de 60 000 à 250 000 ;
une distribution moléculaire massique (Mw/Mn) s'étend de 4 à 6, et
une épaisseur moyenne lamellaire s'étend de 9 nm à 11nm, et une distribution lamellaire (Lw/Ln) est supérieure ou égale à 1,1 ;
dans lequel l'épaisseur lamellaire et la distribution d'épaisseur (Lw/Ln) sont mesurées comme décrit dans la description ;
dans lequel M1 est une quantité d'extrusion pendant 10 minutes avec une charge de 2,16 kg et est mesurée à une température de mesure de 190 °C conformément à l'ASTM D1238 ;

dans lequel lorsque le polymère à base d'éthylène haute densité est un copolymère d'éthylène et du monomère à base d'$\alpha$-oléfine, une teneur du monomère à base d'$\alpha$-oléfine s'étend de 0,1 % en poids à 10 % en poids ;
dans lequel les 48 % à 50% de la structure lamellaire dans le polymère à base d'éthylène haute densité présentent une épaisseur comprise dans une plage allant de 12 nm à 13 nm ;
dans lequel 15 % à 17 % de la structure lamellaire dans le polymère à base d'éthylène haute densité présentent une épaisseur comprise dans une plage allant de 8 nm à 9 nm ;
dans lequel 7 % à 9 % de la structure lamellaire dans le polymère à base d'éthylène haute densité présentent une épaisseur comprise dans une plage allant de 7 nm à 8 nm ;
dans lequel 11 % à 13 % de la structure lamellaire dans le polymère à base d'éthylène haute densité présentent une épaisseur comprise dans une plage allant de 5 nm à 6 nm ;
dans lequel 6 % à 8 % de la structure lamellaire dans le polymère à base d'éthylène haute densité présentent une épaisseur comprise dans une plage allant de 4 nm à 5 nm ;
dans lequel 4 % à 6 % de la structure lamellaire dans le polymère à base d'éthylène haute densité présentent une épaisseur comprise dans une plage allant de 3 nm à 4 nm, et
dans lequel 1 % à 3 % de la structure lamellaire dans le polymère à base d'éthylène haute densité présentent une épaisseur comprise dans une plage allant de 2 nm à 3 nm.

**2.** Polymère à base d'éthylène haute densité selon la revendication 1, dans lequel le polymère à base d'éthylène haute densité comprend une ramification à longue chaîne (LCB), et/ou
dans lequel les monomères à base d'$\alpha$-oléfine comprennent au moins un élément sélectionné parmi le groupe consistant en le propylène, le 1-butène, le 1-pentène, le 4-méthyl-1-pentène, le 1-hexène, le 1-heptène, le 1-octène, le 1-décène, le 1-undécène, le 1-dodécène, le 1-tétradécène, le 1-hexadécène, et le 1-aitosen.

**3.** Polymère à base d'éthylène haute densité selon la revendication 1, dans lequel le polymère à base d'éthylène haute densité est polymérisé à l'aide d'un catalyseur métallocène sur support hybride comprenant au moins un composé métallocène représenté par la Formule 1 ci-dessous, au moins un second composé métallocène représenté par la Formule 2 ci-dessous, et au moins un composé co-catalyseur, et un vecteur :

[Formule 1]

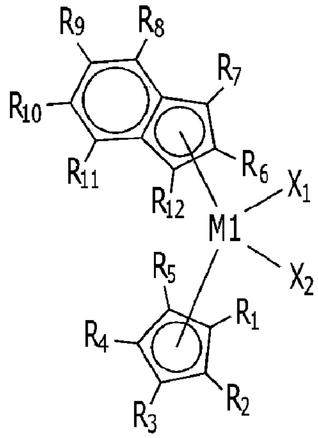

dans lequel dans la Formule 1,

M1 est un métal de transition de groupe 4 du tableau périodique des éléments ;
$X_1$ et $X_2$ sont chacun indépendamment un des atomes d'halogène ;
$R_1$ à $R_{12}$ sont chacun indépendamment un atome d'hydrogène, un groupe alkyle substitué ou non substitué en $C_1$-$C_{10}$ ; groupe aryle substitué ou non substitué en $C_6$-$C_{20}$, ou un groupe alkylaryle substitué ou non substitué en $C_7$-$C_{40}$, et sont liés entre eux afin de former un anneau ;
un cyclopentadiène lié à $R_1$ à $R_5$ et un indène lié à $R_6$ à $R_{12}$ présentent une structure asymétrique présentant différentes structures, et
le cyclopentadiène et l'indène ne sont pas liés entre eux afin de former une structure sans pont ;

[Formule 2]

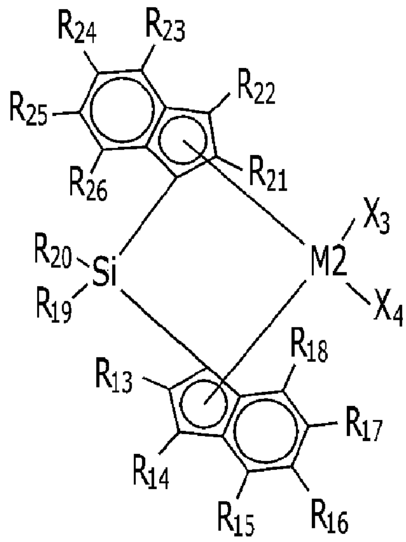

dans lequel dans la Formule 2,
M2 est un métal de transition de groupe 4 du tableau périodique des éléments ;
$X_3$ et $X_4$ sont chacun indépendamment un des atomes d'halogène ;
$R_{13}$ à $R_{18}$ sont chacun indépendamment un atome d'hydrogène, un groupe alkyle substitué ou non substitué en $C_1$-$C_{10}$ ; un groupe aryle substitué ou non substitué en $C_6$-$C_{20}$, ou un groupe alkylaryle substitué ou non substitué en $C_7$-$C_{40}$, et sont liés entre eux afin de former un anneau ;
$R_{21}$ à $R_{26}$ sont chacun indépendamment un atome d'hydrogène, un groupe alkyle substitué ou non substitué en $C_1$-$C_{10}$ ; un groupe aryle substitué ou non substitué en $C_6$-$C_{20}$, ou un groupe alkylaryle substitué ou non substitué en $C_7$-$C_{40}$, et sont liés entre eux afin de former un anneau ;
$R_{19}$ et $R_{20}$ sont chacun indépendamment un groupe alkyle substitué ou non substitué en $C_1$-$C_{20}$, et sont liés entre eux afin de former un anneau ;
l'indène lié à $R_{13}$ à $R_{18}$ et l'indène lié à $R_{21}$ à $R_{26}$ présentent la même structure ou des structures différentes ;
l'indène lié à $R_{13}$ à $R_{18}$ et l'indène lié à $R_{21}$ à $R_{26}$ sont liés à Si afin de former une structure de pont.

**4.** Polymère à base d'éthylène haute densité selon la revendication 3, dans lequel le premier composé métallocène comprend au moins un composé sélectionné parmi le groupe consistant en des composés présentant les structures suivantes :

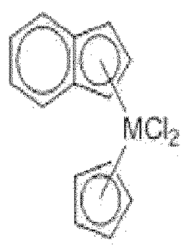
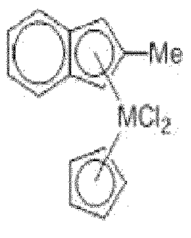
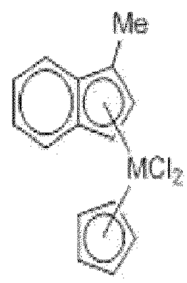
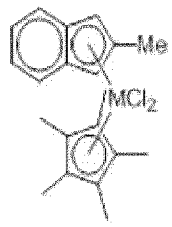
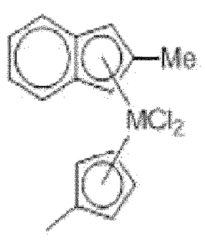
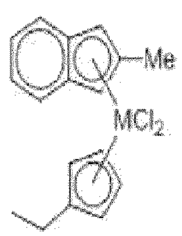
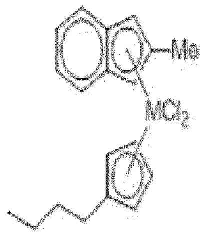
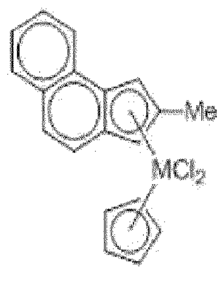

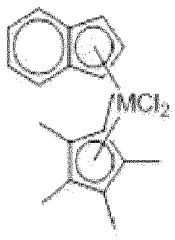 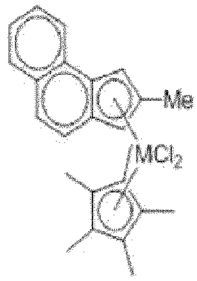 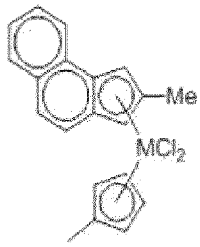 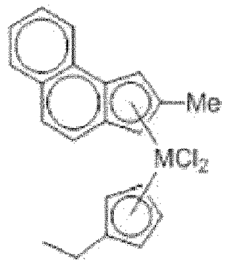

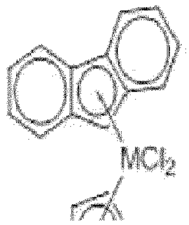 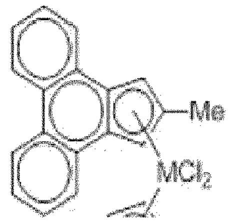 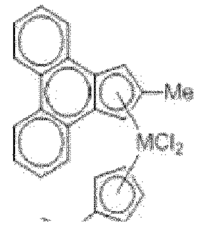 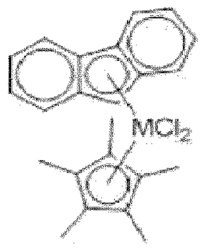

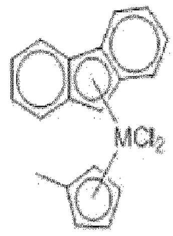 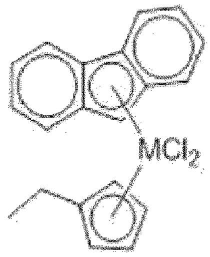 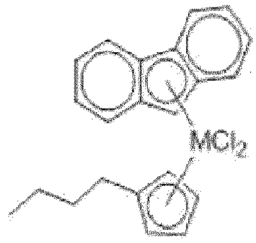

et/ou

dans lequel le second composé métallocène comprend au moins un composé sélectionné parmi le groupe consistant en des composés présentant les structures suivantes :

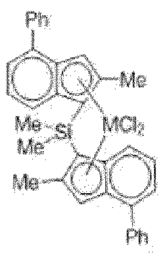 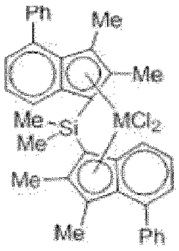 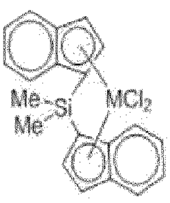 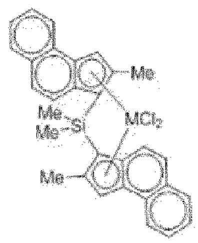

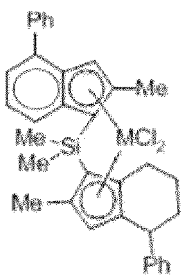 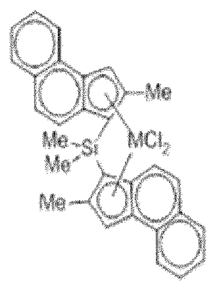 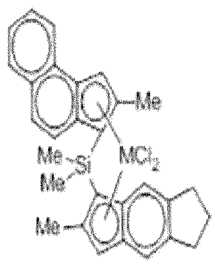 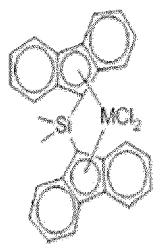

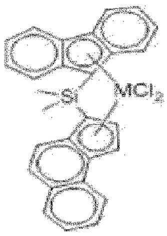
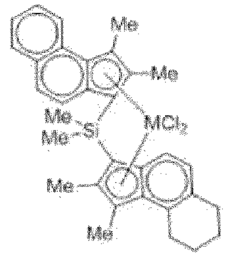
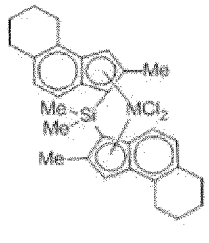
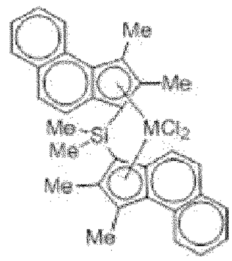
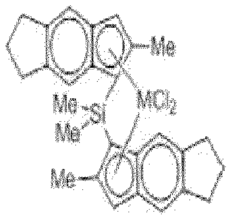
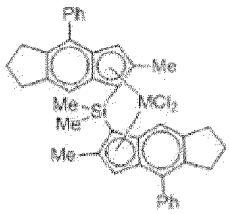
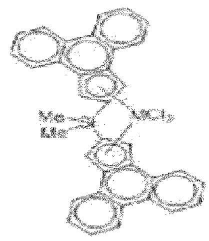
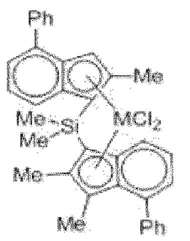
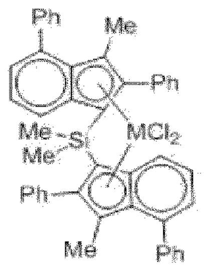
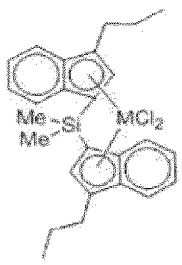
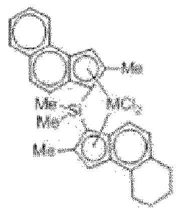
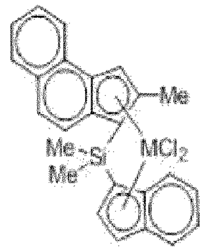
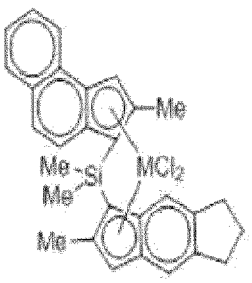
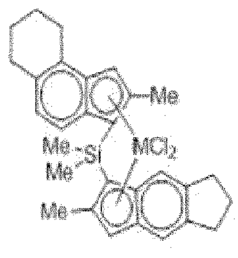
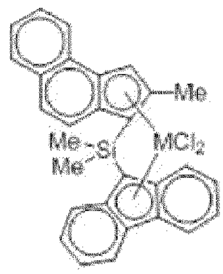
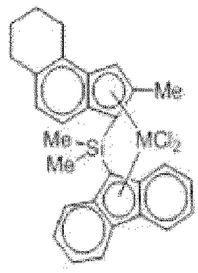
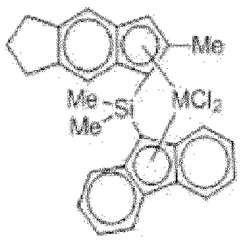
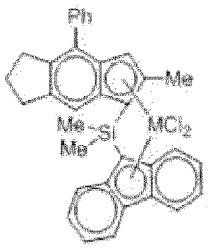
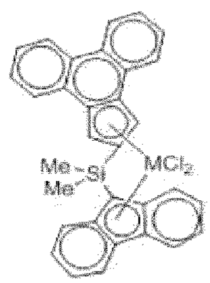

**5.** Polymère à base d'éthylène haute densité selon la revendication 3 ou 4, dans lequel le composé co-catalyseur comprend un ou plusieurs composés représentés par les Formules 3 à 6 :

[Formule 3]

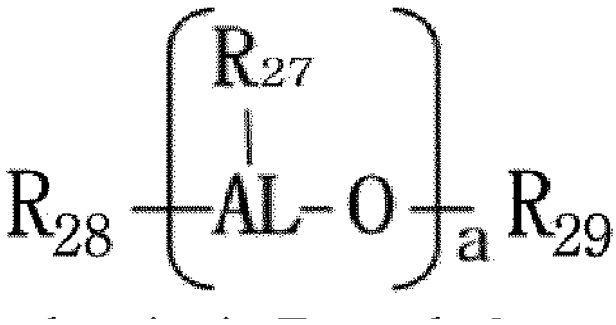

dans lequel dans la Formule 3,

AL est l'aluminium ;
$R_{27}$, $R_{28}$, et $R_{29}$ sont chacun indépendamment un atome d'halogène, un groupe hydrocarboné en $C_1$-$C_{20}$ ; ou un groupe hydrocarboné en $C_1$-$C_{20}$ substitué avec un halogène, et
a est un entier supérieur ou égal à 2 :

[Formule 4]

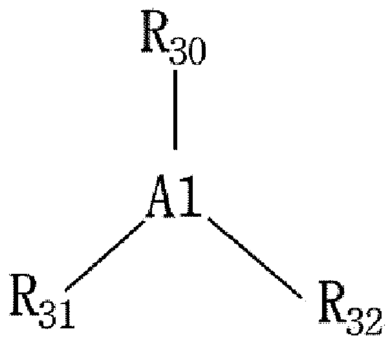

dans lequel dans la Formule 4,
A1 est de l'aluminium ou du bore, et
$R_{30}$ , $R_{31}$, et $R_{32}$ sont chacun indépendamment un atome d'halogène, un groupe hydrocarboné en $C_1$-$C_{20}$, un groupe hydrocarboné en $C_1$-$C_{20}$ substitué avec un halogène, ou un un alkoxy en $C_1$-$C_{20}$ ;

[Formule 5] $[L1\text{-}H]^+ [Z1(A2)_4]^-$

[Formule 6] $[L2]^+ [Z2(A3)_4]^-$

dans lequel dans les Formules 5 et 6,
L1 et L2 sont chacun indépendamment neutres ou des acides de Lewis cationiques ;
Z1 et Z2 sont chacun indépendamment des éléments du groupe 13 du tableau périodique des éléments, et
A2 et A3 sont chacun indépendamment un groupe aryle substitué ou non substitué en $C_6$-$C_{20}$, ou un groupe alkyle substitué ou non substitué en $C_1$-$C_{20}$.

**6.** Polymère à base d'éthylène haute densité selon la revendication 5, dans lequel le composé co-catalyseur représenté par la Formule 3 comprend au moins un élément sélectionné parmi le groupe consistant en le méthylaluminoxane, l'éthylaluminoxane, l'isobutylaluminoxane, et le butylaluminoxane, et/ou

dans lequel le composé co-catalyseur représenté par la Formule 4 comprend au moins un élément sélectionné parmi le groupe consistant en le méthylaluminium, le tripropylaluminium, triéthylaluminium, le tri-isobutylaluminium, le tributylaluminium, le diméthylchloroaluminium, le triisoproprylaluminium, le tricyclopentylaluminium, le tripentylaluminium, le triisopentylaluminium, le trihexylaluminium, le trioctylaluminium, l'éthyldiméthylaluminium, le méthyldiéthylaluminium, le triphénylaluminium, le tri(p-tolyl)aluminium, le méthylate de diméthyaluminium, l'éthylate de diméthyaluminium, le triméthylbore, le triéthylbore, le triisobutylbore, le tripropylbore, le tributylbore, et le tripentafluorophénylbore, et/ou
dans lequel le composé co-catalyseur représenté par la Formule 5 ou 6 comprend chacun séparément au moins un élément sélectionné parmi le groupe consistant en le méthyl-dioctate-yl-ammonium tétrakis(pentafluorophényl)borate, le triméthylammonium tétrakis(phényl)borate, le triéthylammonium tétrakis(phényl)borate, le tripropylammonium tétrakis(phényl)borate, le tributylammonium tétrakis(phényl)borate, le triméthylammonium tétrakis(p-tolyl)borate, le tripropylammonium tétrakis(p-tolyl)borate, le triméthylammonium tétrakis(o,p-diméthylphényl)borate, le triéthylammonium tétrakis(o,p-diméthylphényl)borate, le triméthylammonium tétrakis(p-trifluorométhylphényl)borate, le tributylammonium tétrakis(p-trifluorométhylphényl)borate, le tributylammonium tétrakis(pentafluorophényl)borate, le diéthylammonium tétrakis(pentafluorophényl)borate, le triphénylphosphonium tétrakis(phényl)borate, le triméthylphosphonium tétrakis(phényl)borate, le N,N-diéthylanilinium tétrakis(phényl)borate, le N,N-diméthylanilinium tétrakis(pentafluorophényl)borate, le triphénylcarbonium tétrakis(p-trifluorométhyl phényl)borate, le N,N-diéthylanilinium tétrakis(pentafluorophényl)borate, le triphénylcarbonium tétrakis(p-pentafluorophényl)borate, le triméthylammonium tétrakis(phényl)aluminate, le triéthylammonium tétrakis(phényl)aluminate, le tripropylammonium tétrakis(phényl)aluminate, le tributylammonium tétrakis(phényl)aluminate, le triméthylammonium tétrakis(p-tolyl)aluminate, le tripropylammonium tétrakis(p-tolyl)aluminate, le triéthylammonium tétrakis(o,p-diméthylphényl)aluminate, le tributylammonium tétrakis(p-trifluorométhylphényl)aluminate, le tributylammonium tétrakis(pentafluorophényl)aluminate, le N,N-diéthylanilinium tétrakis(phényl)aluminate, le N,N-diéthylanilinium tétrakis(pentafluorophényl)aluminate, le diéthylammonium tétrakis(pentafluorophényl)aluminate, le tétrakis(pentafluorophényl)aluminate, le triphénylphosphonium tétrakis(phényl)aluminate, et le triméthylphosphonium tétrakis(phényl)aluminate.

**7.** Polymère à base d'éthylène haute densité selon l'une quelconque des revendications 3 à 6, dans lequel un rapport de masse entre une masse totale des métaux de transition du premier composé métallocène et du second composé métallocène et le vecteur s'étend de 1 : 1 à 1 : 1000, et
un rapport de masse du premier composé métallocène au second composé métallocène s'étend de 1 :100 à 100 : 1.

**8.** Polymère à base d'éthylène haute densité selon la revendication 5, dans lequel un rapport de masse entre les composés de co-catalyseur représentés par les Formules 3 et 4 et le vecteur s'étend de 1 : 100 à 100 : 1, et
un rapport de masse entre les composés de co-catalyseur représentés par les Formules 5 et 6 et le vecteur s'étend de 1 : 20 à 20 : 1.

**9.** Polymère à base d'éthylène haute densité selon l'une quelconque des revendications 3 à 8, dans lequel le vecteur comprend au moins un élément sélectionné parmi le groupe consistant en la silice, l'alumine, l'oxyde de titane, la zéolite, l'oxyde de zinc, et l'amidon.

**10.** Utilisation du polymère à base d'éthylène haute densité selon la revendication 1 pour l'injection, l'extrusion, la compression, ou le moulage rotatif.

**11.** Procédé destiné à produire le polymère à base d'éthylène haute densité selon la revendication 1, le procédé comprenant les étapes suivantes :

(a) préparer au moins un premier composé métallocène représenté par la Formule 1 ci-dessous, au moins un second composé métallocène représenté par la Formule 2 ci-dessous, et au moins un composé co-catalyseur ;
(b) préparer un mélange de catalyseur en mélangeant le au moins un premier composé métallocène préparé, le au moins un second composé métallocène préparé, et le au moins un composé co-catalyseur préparé à 0 °C jusqu'à 100 °C pendant 5 minutes jusqu'à 24 heures ;
(c) préparer une composition de catalyseur sur support hybride, en ajoutant le mélange de catalyseur à un réacteur dans lequel un vecteur et un solvant sont présents, et mélanger à 0 °C jusqu'à 100 °C pendant 3 minutes jusqu'à 48 heures, et
(d) introduire la composition de catalyseur sur support hybride, au moins un monomère d'a-oléfine sélectionné parmi le groupe consistant en des $\alpha$-oléfines, et de l'éthylène dans un réacteur autoclave ou un réacteur de polymérisation en phase gazeuse, et faire subir une polymérisation au polymère à base d'éthylène haute densité selon la revendication 1 dans un environnement où une température s'étend de 60 °C à 100 °C et une pression s'étend de 10 bar à 20 bar :

[Formule 1]

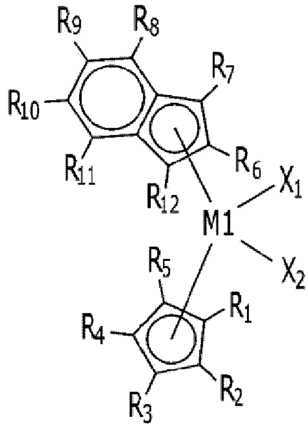

dans lequel dans la Formule 1,

M1 est un métal de transition de groupe 4 du tableau périodique des éléments ;
$X_1$ et $X_2$ sont chacun indépendamment un des atomes d'halogène ;
$R_1$ à $R_{12}$ sont chacun indépendamment un atome d'hydrogène, un groupe alkyle substitué ou non substitué en $C_1$-$C_{10}$ ; un groupe aryle substitué ou non substitué en $C_6$-$C_{20}$, ou un groupe alkylaryle substitué ou non substitué en $C_7$-$C_{40}$, et peuvent être liés entre eux afin de former un anneau ;
un cyclopentadiène lié à $R_1$ à $R_5$ et un indène lié à $R_6$ à $R_{12}$ présentent une structure asymétrique présentant différentes structures, et
le cyclopentadiène et l'indène forment une structure sans pont étant donné que le cyclopentadiène et l'indène ne sont pas liés entre eux ;

[Formule 2]

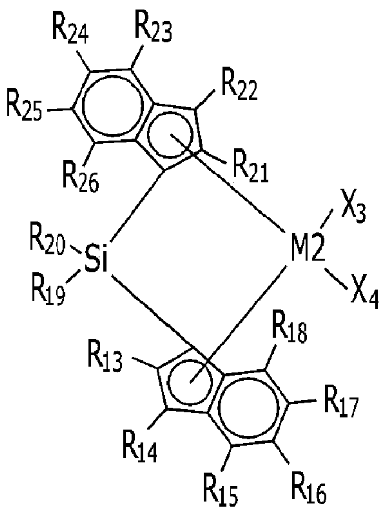

dans lequel dans la Formule 2,
M2 est un métal de transition de groupe 4 du tableau périodique des éléments ;
$X_3$ et $X_4$ sont chacun indépendamment un des atomes d'halogène ;
$R_{13}$ à $R_{18}$ sont chacun indépendamment un atome d'hydrogène, un groupe alkyle substitué ou non substitué en $C_1$-$C_{10}$ ; un groupe aryle substitué ou non substitué en $C_6$-$C_{20}$, ou un groupe alkylaryle substitué ou non substitué en $C_7$-$C_{40}$, et sont liés entre eux afin de former un anneau ;
$R_{21}$ à $R_{26}$ sont chacun indépendamment un atome d'hydrogène, un groupe alkyle substitué ou non substitué en $C_1$-$C_{10}$ ; un groupe aryle substitué ou non substitué en $C_6$-$C_{20}$, ou un groupe alkylaryle substitué ou non

substitué en $C_7$-$C_{40}$, et sont liés entre eux afin de former un anneau ;

$R_{19}$ et $R_{20}$ sont chacun indépendamment un groupe alkyle substitué ou non substitué en $C_1$-$C_{20}$, et sont liés entre eux afin de former un anneau ;

l'indène lié à $R_{13}$ à $R_{18}$ et l'indène lié à $R_{21}$ à $R_{26}$ présentent la même structure ou des structures différentes ;

l'indène lié à $R_{13}$ à $R_{18}$ et l'indène lié à $R_{21}$ à $R_{26}$ sont liés à Si afin de former une structure de pont.

**12.** Procédé selon la revendication 11, dans lequel le composé co-catalyseur comprend un ou plusieurs composés représentés par les Formules 3 à 6 :

[Formule 3]

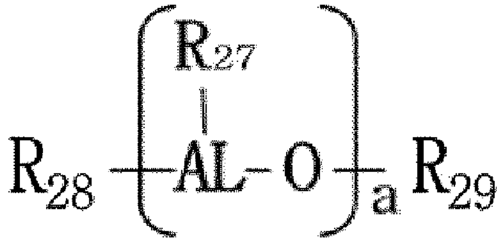

dans lequel dans la Formule 3,

AL est l'aluminium ;

$R_{27}$, $R_{28}$, et $R_{29}$ sont chacun indépendamment un atome d'halogène, un groupe hydrocarboné en $C_1$-$C_{20}$ ; ou un groupe hydrocarboné en $C_1$-$C_{20}$ substitué avec un halogène, et

a est un entier supérieur ou égal à 2 :

[Formule 4]

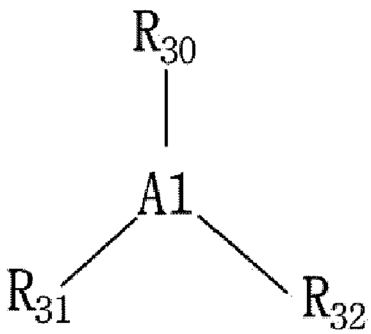

dans lequel dans la Formule 4,

A1 est de l'aluminium ou du bore, et

$R_{30}$ , $R_{31}$, et $R_{32}$ sont chacun indépendamment un atome d'halogène, un groupe hydrocarboné en $C_1$-$C_{20}$, un groupe hydrocarboné en $C_1$-$C_{20}$ substitué avec un halogène, ou un un alkoxy en $C_1$-$C_{20}$ ;

[Formule 5] $[L1\text{-}H]^+ [Z1(A2)4]^-$

[Formule 6] $[L2]^+ [Z2(A3)_4]^-$

dans lequel dans les Formules 5 et 6,

L1 et L2 sont chacun indépendamment neutres ou des acides de Lewis cationiques ;

Z1 et Z2 sont chacun indépendamment des éléments du groupe 13 du tableau périodique des éléments, et

A2 et A3 sont chacun indépendamment un groupe aryle substitué ou non substitué en $C_6$-$C_{20}$, ou un groupe alkyle substitué ou non substitué en $C_1$-$C_{20}$.

**13.** Procédé selon la revendication 11 ou 12, dans lequel l'étape (c) comprend les étapes suivantes :

séparer un surnageant en réalisant une réaction de précipitation sur la composition de catalyseur sur support hybride ;
retirer le surnageant séparé, et laver un précipité de la composition de catalyseur restant avec un solvant, et sécher sous vide la composition de catalyseur lavée à 20 °C jusqu'à 200 °C pendant 1 heure jusqu'à 48 heures.

**14.** Procédé selon l'une quelconque des revendications 11 à 13, dans lequel les monomères d'a-oléfine comprennent au moins un élément sélectionné parmi le groupe consistant en le propylène, le 1-butène, le 1-pentène, le 4-méthyl-1-pentène, le 1-héxène, le 1-heptène, le 1-octène, le 1-décène, le 1-undécène, le 1-dodécène, le 1-tétradécène, le 1-hexadécène, et le 1-aitosen.

**15.** Tuyau utilisant le polymère à base d'éthylène haute densité selon l'une quelconque des revendications 1 à 9.

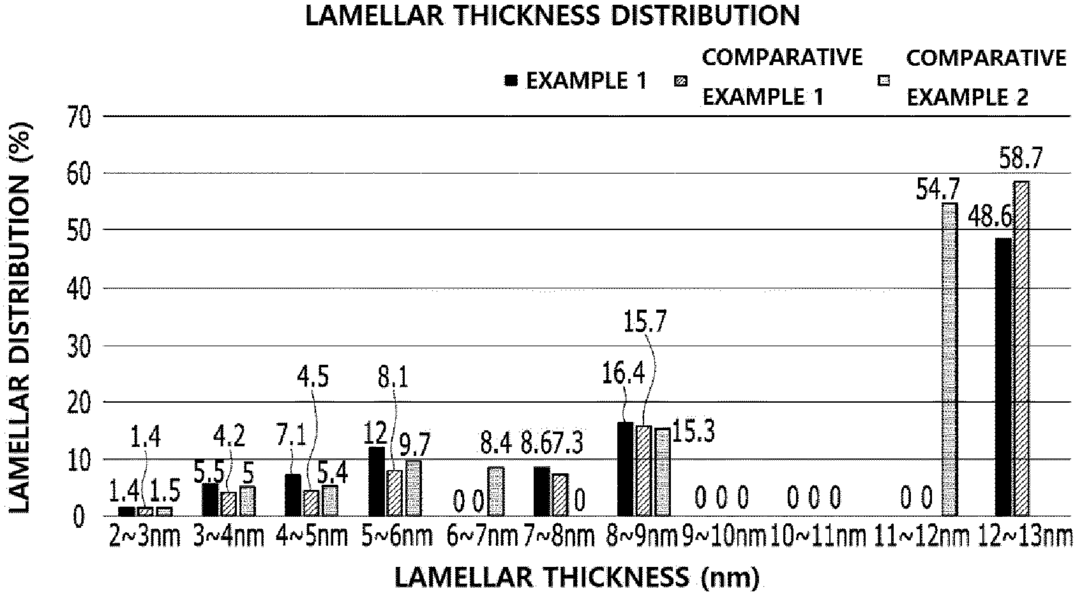
LAMELLAR THICKNESS DISTRIBUTION
EXAMPLE 1
COMPARATIVE EXAMPLE 1
COMPARATIVE EXAMPLE 2
LAMELLAR DISTRIBUTION (%)
70
60
50
40
30
20
10
0
1.4 1.4 1.5
5.5 4.2 5
7.1 4.5 5.4
12 8.1 9.7
0 0 8.4
8.6 7.3 0
16.4 15.7 15.3
0 0 0
0 0 0
0 0 54.7
48.6 58.7
2~3nm
3~4nm
4~5nm
5~6nm
6~7nm
7~8nm
8~9nm
9~10nm
10~11nm
11~12nm
12~13nm
LAMELLAR THICKNESS (nm)

FIG. 1

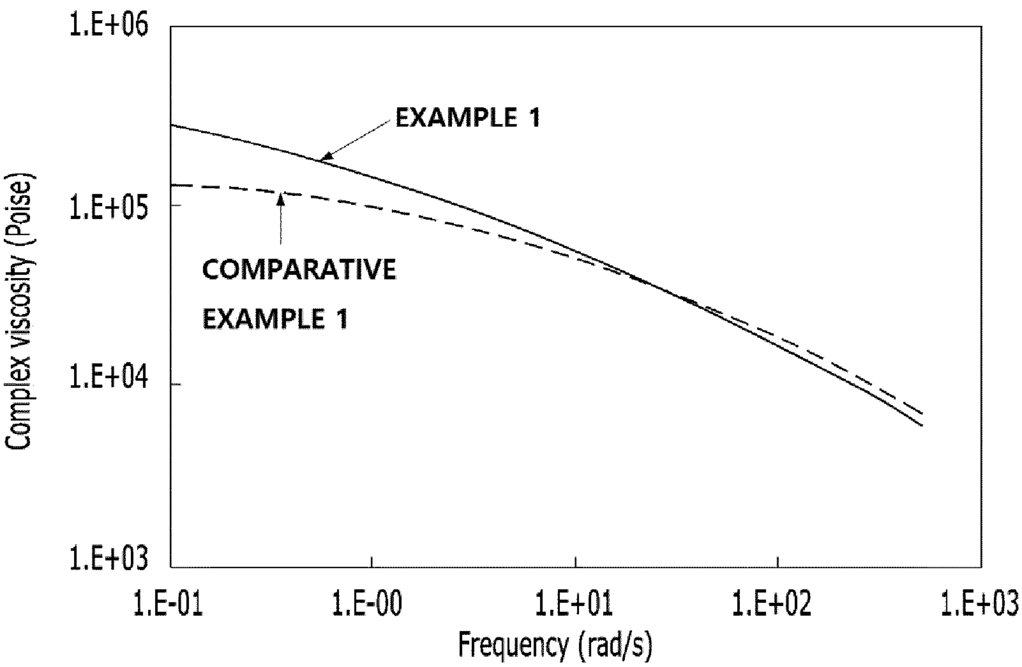
1.E+06
1.E+05
1.E+04
1.E+03
Complex viscosity (Poise)
EXAMPLE 1
COMPARATIVE EXAMPLE 1
1.E-01
1.E-00
1.E+01
1.E+02
1.E+03
Frequency (rad/s)

FIG. 2

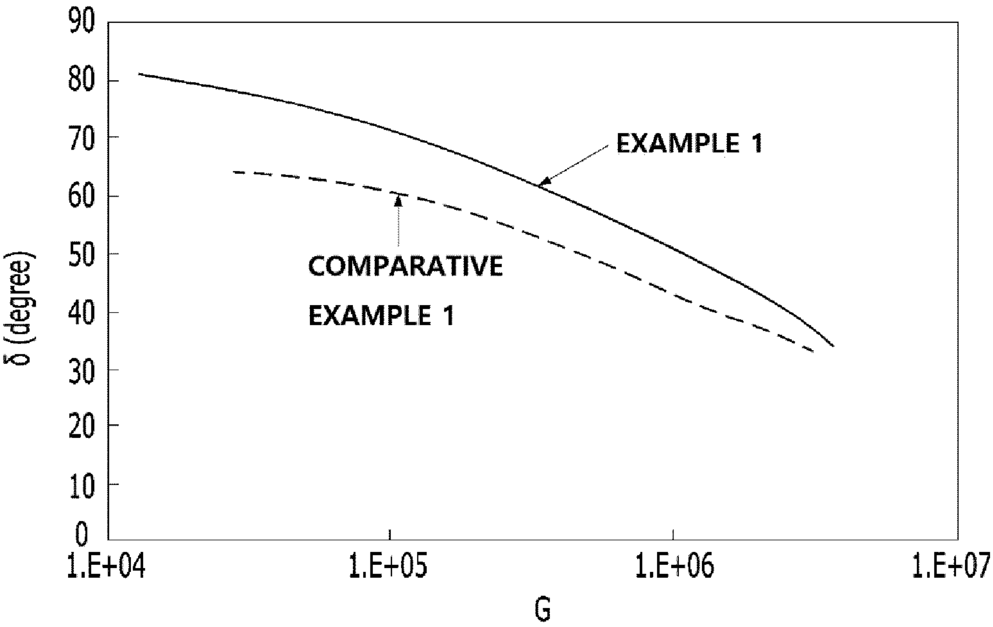
90
80
70
60
50
40
30
20
10
0
δ (degree)
EXAMPLE 1
COMPARATIVE
EXAMPLE 1
1.E+04
1.E+05
1.E+06
1.E+07
G

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6525150 B
- WO 2017181424 A1


### Non-patent literature cited in the description


- **MATSKO MIKHAIL A. et al.** Study of the compositional heterogeneity of ethylene-hexene-1 copolymers by thermal fractionation technique by means of differential scanning calorimetry. *JOURNAL OF THERMAL ANALYSIS AND CALORIMETRY*, 21 November 2012, vol. 113 (2)
- *Polym. J.*, 1992, vol. 24, 9